(19) Europäisches Patentamt / European Patent Office / Office européen des brevets

(11) **EP 2 766 909 B1**

(12) **EUROPEAN PATENT SPECIFICATION**

(45) Date of publication and mention
of the grant of the patent:
**08.06.2016 Bulletin 2016/23**

(21) Application number: **12832800.2**

(22) Date of filing: **02.10.2012**

(51) Int Cl.:
*G21C 5/12* *(2006.01)*    *G21D 1/00* *(2006.01)*
*G21F 9/28* *(2006.01)*    *G21F 9/30* *(2006.01)*
*G21D 5/08* *(2006.01)*    *G21C 19/48* *(2006.01)*
*G21C 5/02* *(2006.01)*    *G21C 3/54* *(2006.01)*
*G21C 1/22* *(2006.01)*

(86) International application number:
**PCT/US2012/058411**

(87) International publication number:
**WO 2013/077941 (30.05.2013 Gazette 2013/22)**

(54) **NUCLEAR REACTOR AND RELATED METHOD**

KERNREAKTOR SOWIE ZUGEHÖRIGES VERFAHREN

RÉACTEUR NUCLÉAIRE ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2011 US 201113251717**

(43) Date of publication of application:
**20.08.2014 Bulletin 2014/34**

(73) Proprietor: **Transatomic Power Corporation
Cambridge, MA 02139 (US)**

(72) Inventors:
• **MASSIE, Mark
Cambridge, MA 02139 (US)**

• **DEWAN, Leslie, C.
Cambridge, MA 02139 (US)**

(74) Representative: **Conroy, John et al
Fish & Richardson P.C.
Highlight Business Towers
Mies-van-der-Rohe-Straße 8
80807 München (DE)**

(56) References cited:
**CH-A5- 596 638      JP-A- H 095 471
US-A- 3 449 208**

**Description**

BACKGROUND

This description relates to nuclear reactors and related methods and apparatus.

A self-sustaining nuclear reaction in nuclear fuel within a reactor core can be used to generate heat and in turn electrical power. In typical molten salt reactors (sometimes called MSRs), the nuclear fuel is dissolved in a molten salt. In some proposed MSRs, the nuclear fuel would include actinides recovered from spent nuclear fuel (sometimes called SNF or simply spent fuel) of other reactors.

Swiss patent No. 596 638 discloses a method for releasing nuclear energy by micro-explosions and a nuclear reactor.

SUMMARY

Broadly, what we describe here is a nuclear reactor method and apparatus that uses molten salt and fissionable material that is typically at least partly spent fuel from another reactor, and a moderator chosen and structured to cause a critical reaction.

The present invention relates to a nuclear reactor as set out in claim 1, and a method as set out in claim 9.

Other embodiments are described in the dependent claims.

Other aspects, features, implementations, and advantages will become apparent from the following description, and from the claims.

DESCRIPTION

Figure 1 is schematic diagram.
Figures 2, 5, 6, 7, 8, and 9 are sectional views of reactor cores.
Figure 3 is a schematic diagram associate with a simulation.
Figure 4 is a graph of neutron flux.
Figure 10 is a flow chart.
Figure 11 is a graph of cross sections.

Among other things, implementations of what we describe here hold promise for producing electricity safely at relatively low cost using the spent nuclear fuel (in some cases without further processing) from existing nuclear reactors and using elements of nuclear reactor technology that have been tried or are considered feasible. The nuclear reactor that we propose to use to generate the electricity renders the spent fuel into a state that is much less problematic from an environmental and disposal perspective-the nuclear reactions that occur in the reactor induce fission in the majority of the actinides comprising the spent fuel, reducing their radioactive half-lives. At least some implementations of what we describe here modify previously developed molten salt reactor technology to enable the use of spent fuel from other reactors.

In at least some of the implementations, an important feature of the modified molten salt reactor is that the molten fuel-salt mixture includes all of the material that is contained in the spent nuclear fuel. When we refer to spent fuel, SNF, or spent nuclear fuel, we mean all of the fuel material that is in a spent fuel assembly except for the cladding material, which is not technically part of the spent fuel. In effect, at least in some of the implementations, the reactor core uses all of the spent fuel without requiring any separation or other manipulation.

Also, an important feature is that a form of zirconium hydride ($ZrH_x$, where x may range from 1 to 4) is used as a moderator. In some cases, the zirconium hydride moderator is used as part of the elements that form a stationary reactor core. In some cases, the zirconium hydride moderator is used in movable moderator elements that can be inserted into and removed from the reactor core. In some cases, the zirconium hydride moderator is used in both the stationary reactor core and the moderator elements. The zirconium hydride can be more effective than other moderators in producing neutrons having appropriate energy levels to enable the spent fuel, which otherwise might be unable to do so, to become critical within the reactor core. In some cases, the fixed or moveable or both moderator elements can be one or more hydrides. In some cases, the elements can be one or more deuterides. In some cases, the elements can be a combination of hydrides or deuterides.

Although some of the implementations that we describe here contemplate combinations of molten salt reactors that use the spent fuel and highly effective moderators such as zirconium hydride, in some implementations, it may not be necessary to include all of these features together in a single facility.

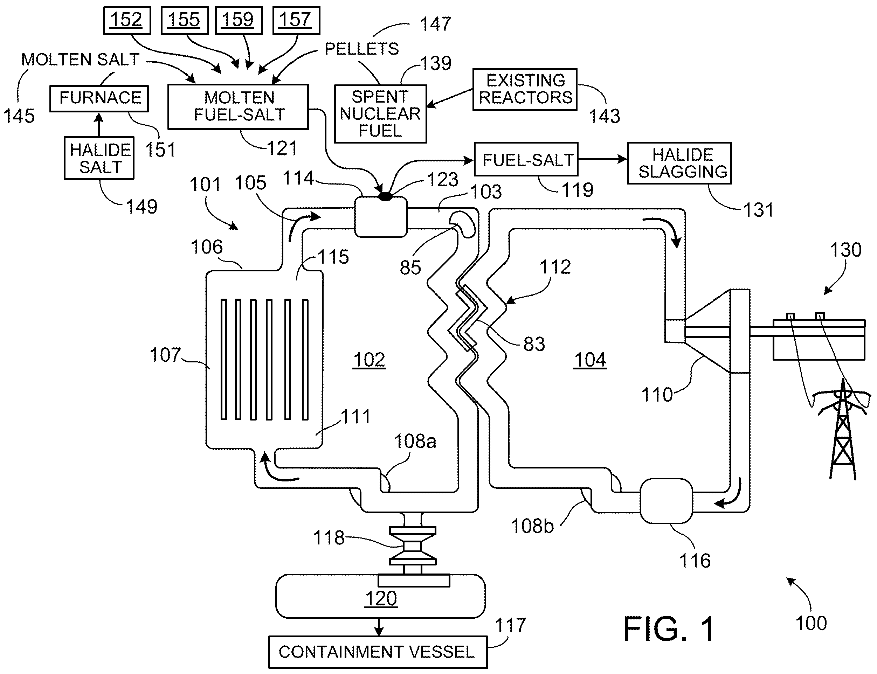

Figure 1 is a schematic diagram of an example nuclear reactor power plant 100 that includes a nuclear reactor core 106 in a primary loop 102. A molten (liquid) fuel-salt mixture 103 is circulated 105 continuously within the primary loop 102, including through the reactor core 106. The primary loop is charged with enough fuel-salt mixture to fill the loop, including the reactor core. The portion of the fuel-salt mixture that is in the reactor core at a given time is in a critical configuration, generating heat. (Fuel that has passed out of the reactor core and is in the rest of the loop is not in a critical configuration.) While the fuel-salt mixture is in this critical configuration in the reactor core, neutrons induce fission in the actinides, generating heat, and turning the actinides into fission products.

The salt (we sometimes use the simple word salt interchangeably with fuel-salt mixture or fuel) travels through the primary loop at a fast mass flow rate-in some implementations; this rate is approximately 800 kilograms per second. In some implementations, the rate could be higher than 800 kilograms per second or lower than 800 kilograms per second. The salt is moved quickly, because a large amount of heat is generated in the salt by the fissioning actinides in the reactor core 106, and the heat carried in this hot salt must be moved rapidly to the heat exchanger 112.

Because the salt is traveling so quickly, only a small fraction of the actinides are fissioned in the reactor core during each pass through the loop. The actinides, however, pass many times through the reactor core. In some cases, after 10 years' worth of passes through the reactor core, for example, approximately 30% of a given initial amount of actinides may be turned into fission products.

The actinides dissolved in the fuel-salt mixture 103 can be a wide variety of actinides and combinations of actinides and can originate from a wide variety of sources and combinations of sources. In some implementations, for example, the actinides can be from spent nuclear fuel 139 generated by existing nuclear reactors 143. In some implementations, the actinides originate from decommissioned weapons 152 and include plutonium and/or uranium. In some examples, the sources can include natural uranium 155. In some examples, the sources can include depleted uranium 159 (left over from an enrichment process). In some examples, the sources can include fresh fuel 157 (which may encompass uranium enriched in U-235, or a mixture of fertile thorium and a fissile matter such as U-233, U-235, Pu-239, or Pu-241). In some examples, the sources can include a combination of any two or more of fresh fuel 157, decommissioned weapons plutonium or uranium 152, natural uranium 155, depleted uranium 159, or spent nuclear fuel 139.

The distribution of energy levels of neutrons in the reactor core affects the efficiency with which actinide fissioning occurs in the fuel-salt mixture in the core.

A cross section is a measure of the probability of a certain reaction occurring when a neutron interacts (e.g., collides) with a nucleus. For example, an absorption cross section measures the probability that a neutron will be absorbed by a nucleus of a particular isotope if it is incident upon that nucleus. Every isotope has a unique set of cross sections, which vary as a function of an incident neutron's kinetic energy.

The distribution of kinetic energies in a system's neutron population is represented, for example, by a neutron energy spectrum. Neutrons produced during a fission reaction have, on average, initial kinetic energies in the "fast" region of the neutron energy spectrum. Fast neutrons have kinetic energies greater than, for example, 10 keV. Epithermal neutrons have kinetic energies between, for example, 1 eV and 10 keV. Thermal neutrons have kinetic energies of, for example, approximately 0.025 eV. In the context of nuclear reactors, thermal neutrons more broadly refer to those with kinetic energies below, for example, 1 eV.

In some implementations, it is desirable for the reactor core (including the fuel-salt mixture in the core) to have a neutron energy spectrum comprising a large thermal neutron population, because in many cases thermal neutrons induce fission in actinides more readily than do fast neutrons. Decreasing the population of thermal neutrons in the reactor core reduces the rate of actinide fission in the reactor core.

The choice of salts to be used for the fuel-salt mixture depends, among other things, on the effect that the salt may have on the energy levels of neutrons within the mixture.

Several different factors should be taken into consideration when choosing a salt composition for a molten salt reactor. Important considerations are: the solubility of the heavy nuclei in the salt (generally, higher solubilities are better), neutron capture cross-section of the isotopes comprising the salt (generally, a lower capture cross-section is better), and moderating ability of the isotopes comprising the salt (generally, a higher moderating ability is better).

Heavy nuclide solubility depends on the chemical composition of the salt (e.g., lithium fluoride has a higher heavy nuclide solubility than potassium fluoride). In some implementations, preferred salt compositions are ones with higher heavy nuclide solubilities. According to our analysis, several salt compositions (detailed in the following section) have heavy nuclide solubilities sufficiently high to allow the fuel-salt mixture in the reactor core to remain critical. How high the solubility needs to be depends on the fuel that is being used. In simulations based on a model with ten $ZrH_{1.6}$ rings (discussed in more detail later) and using fresh fuel enriched to 20% U-235, 0.35% heavy nuclide solubility was sufficient. A previously proposed molten salt breeder reactor design had planned to use a salt with 12% heavy nuclides. Using the entire spent fuel actinide vector in systems described here, we estimate a need for at least 20% solubility. All percentages are expressed in mol%.

The neutron capture cross section depends on the isotopic composition of the particular one or more species in the salt. Li-7 has a lower neutron capture cross section than Li-6, and is therefore likely to be a better lithium isotope for the lithium fluoride salt, when a lithium fluoride salt is being used). Chloride salts are, in general, expected to be less useful than fluoride salts because chlorine is comprised primarily of Cl-35, which has a high neutron capture cross section. As explained in subsequent sections, in the salts that are considered for use, the other component could advantageously include lighter elements such as lithium, which have a greater moderating ability than heavier elements such as chlorine.

In some implementations, the fuel-salt mixture 103 comprises a molten halide salt (e.g., LiF-(Heavy Nuclide)$F_x$). In the preceding and subsequent chemical formulas, a heavy nuclide may be, for example, a lanthanide, or may be an actinide, or may be some combination of the two. There are at least three general classes of halide salts that can be used in molten salt reactors: chloride salts can be used, fluoride salts can be used, and iodide salts can be used, or a combination of any two or more of them can be used. In some implementations, there may be advantages to using fluoride salts in the nuclear reactor system 100. (As mentioned earlier, for example, the isotope Cl-35, which has a natural abundance of 75.55% in naturally occurring chloride salts, has a high thermal neutron absorption cross section. A chloride salt, by contrast, therefore reduces the number of thermal neutrons in the reactor core's neutron energy spectrum.)

Suitable salt compositions may include each of the following taken individually, and combinations of any two or more of them: LiF-(Heavy Nuclide)$F_x$, NaF-BeF$_2$-(Heavy Nuclide)$F_x$, LiF-NaF-(Heavy Nuclide)$F_x$, NaF-KF-(Heavy Nuclide)$F_x$, and NaF-RbF-(Heavy Nuclide)$F_x$. Example compositions using these species may include each of the following or combinations of any two or more of them: 8.5mol%(Heavy Nuclide)$F_x$-34mol%NaF-57.5mol%BeF$_2$, 12mol%(Heavy Nuclide)$F_x$-76mol%NaF-12mol%BeF$_2$, 15mol%(Heavy Nuclide)$F_x$-25mol%NaF-60mol%BeF$_2$, 22mol%(Heavy Nuclide)$F_x$-33mol%LiF-45mol%NaF, 22mol%(Heavy Nuclide)$F_x$-78mol%LiF, 25mol%(Heavy Nuclide)$F_x$-48.2mol%NaF-26.8mol%KF, 27mol%(Heavy Nuclide)$F_x$-53mol%NaF-20mol%RbF, 27.5mol%(Heavy Nuclide)$F_x$-46.5mol%NaF-26mol%KF, and 30mol%(Heavy Nuclide)$F_x$-50mol%NaF-20mol%KF.

Although a salt with a high heavy nuclide solubility is useful, considerations other than the heavy nuclide solubility should also be taken into account. The composition with the highest molar percentage of (Heavy Nuclide)$F_x$ is not necessarily the most desirable. For example, 30mol%(Heavy Nuclide)$F_x$-50mol%NaF-20mol%KF has a higher heavy nuclide concentration than 22mol%(Heavy Nuclide)$F_x$-78mol%LiF, but the 22mol%(Heavy Nuclide)$F_x$-78mol%LiF may be better because the lithium in the second salt has a greater moderating ability than the sodium or potassium in the first salt. Lighter elements such as lithium have a greater moderating ability than heavier elements such as sodium.

In some implementations, the fuel-salt mixture 103 comprises a lithium fluoride salt containing dissolved heavy nuclides (LiF-(Heavy Nuclide)$F_x$). In some implementations, a LiF-(Heavy Nuclide)$F_x$ mixture can contain up to, for example, 22 mol% (Heavy Nuclide)$F_x$. Lithium is a very light element and its moderating capability can make it neutronically advantageous for a thermal spectrum reactor. Li-7, in particular, has desirable neutronic properties. Li-6 has a significantly higher thermal neutron absorption cross section (941 barns; 1 barn = 10m$^{-24}$m$^2$) than Li-7 (0.045 barns). Neutron absorption by lithium decreases the reactor's reactivity because the neutrons absorbed by lithium are unavailable to split actinides. As such, in some implementations, the lithium in the salt can be enriched so that it has a high fraction of Li-7, which reduces the tendency of the fuel-salt mixture to absorb thermal neutrons.

In some implementations, beryllium can be added to molten halide salts to lower the salts' melting temperatures. In some implementations, the fuel-salt mixture 103 comprises a beryllium lithium fluoride salt containing dissolved heavy nuclei (LiF-BeF$_2$-(Heavy Nuclide)$F_x$). The presence of beryllium in the fuel-salt mixture can, however, reduce the effectiveness of Li-7 enrichment, because Li-6 is produced in (n,α) reactions with Be-9. Therefore, in some implementations, no beryllium is added to the molten salt. In some implementations, a reduced amount of beryllium is added.

In addition, adding beryllium can decrease the solubility of actinides in the salt. Because there is less fissile material per kilogram of spent nuclear fuel than of fresh fuel, a higher actinide concentration may be required to make the nuclear reactor system 101 become critical. Removing BeF$_2$ entirely from the salt can increase the actinide solubility of the salt from 12.3% to 22%, enough to enable the fuel-salt mixture to reach criticality without first processing spent nuclear fuel to increase the fissile-to-fertile ratio (e.g., by removing uranium). In some implementations, the resulting increase in actinide solubility allows the nuclear reactor power plant 100 to use the entire spent nuclear fuel vector as fuel. In some implementations, a mixture of spent nuclear fuel, or portions of it, combined with other elements of fuel can also be used.

During operation, the fuel-salt mixture 103 fills the reactor core 106. Some of the free neutrons from fission reactions in the reactor core 106 can induce fission in other fuel atoms in the reactor core 106, and other neutrons from the fission reaction can be absorbed by non-fuel atoms or leak out of the reactor core 106. The fuel-salt mixture in the reactor core can be in a critical or self-sustaining state when the number of neutrons being produced in the reactor core 106 is equal to or substantially equal to the number of neutrons being lost (e.g., through fission, absorption, or transport out of the system (e.g., "leakage")). When in a critical state, the nuclear reaction is self-sustaining.

In some instances, whether the fuel-salt mixture in the reactor core is in a critical state is primarily determined by three factors: the nuclear properties of the fuel-salt mixture, the properties of the materials used to fabricate the reactor core 106, and the geometric arrangement of the fuel-salt mixture and the other materials in the reactor core. The combination of these three factors primarily determines the distribution of neutrons in space and energy throughout the reactor core 106 and, thereby, the rate of the reactions occurring in the reactor core 106. The reactor core 106 can be designed to keep the fuel-salt mixture in the reactor core in a critical state by arranging the mixture, the geometric arrangement, and the materials so that the rate of neutron production exactly or approximately equals the rate of neutron loss.

Generally, U-235 and Pu-239 have a larger fission cross section in the thermal neutron energy region than they do in the fast neutron energy region, that is, these nuclei are more easily fissioned by thermal neutrons than by fast neutrons.

Neutron capture is another possible nuclear reaction and may occur between U-238 and a neutron. In a neutron capture reaction, the nucleus absorbs a neutron that is incident upon it, but does not reemit that neutron or undergo fission.

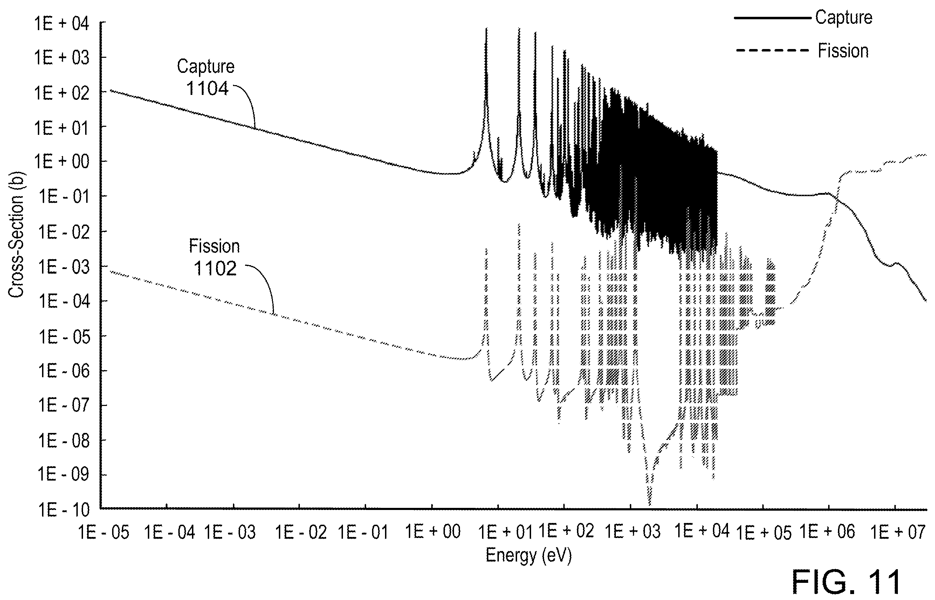

In some instances, the most effective neutron energies for transmuting U-238 into Pu-239 are in the epithermal region. Pu-239, a fissile isotope, is produced when U-238 captures a neutron to become U-239, which beta decays into Np-239, which beta decays into Pu-239. The optimal energy range for converting U-238 into U-239 (and eventually into Pu-239) is determined by U-238's cross sections. In figure 11, the fission cross section of U-238 1102 is lower than the capture cross section 1104 for all energies below about 1 MeV, meaning that a neutron with a kinetic energy below 1 MeV has a greater probability of being captured by U-238 than causing U-238 to fission. The probability of capturing a neutron relative to the probability of fissioning (the vertical distance between the two plots) is greatest in the range from approximately 5 eV to 10 KeV. This is a good range for converting U-238 into Pu-239. The thermal and epithermal neutron spectra needed by some implementations can be achieved by introducing moderating materials. In some implementations, the moderating materials can, for example, be introduced in the reactor core elements. In some implementations, the moderating materials can be inserted into and removed from the reactor core 106. In some implementations, a combination of the two can be used. In some implementations, the moderating elements shift the neutron spectra to more useful characteristics, by, for example, reducing the energies of neutrons in the fuel-salt mixture. The moderating efficiency, $\eta_{mod}$, of a material is defined as the mean logarithmic reduction of neutron energy per collision, $\xi$, multiplied by the macroscopic scattering cross section $\Sigma_s$ divided by the macroscopic absorption cross section $\Sigma_a$, as presented in equations 1.1 and 1.2.

$$\xi = ln\frac{E_0}{E} = 1 + \frac{(A-1)^2}{2A} ln\left(\frac{A-1}{A+1}\right) \qquad [1.1]$$

$$\eta_{mod} = \frac{\xi \Sigma_s}{\Sigma_a} \qquad [1.2]$$

In equation 1.1, $E_0$ is the kinetic energy of the neutron before the collision with the nucleus, E is the kinetic energy of the neutron after the collision with the nucleus, and A is the atomic mass of the nucleus.

As indicated by equation 1.1, neutrons typically lose a smaller fraction of their kinetic energy when they scatter off nuclei with a larger atomic mass. Conversely, neutrons typically lose a larger fraction of their kinetic energy when they scatter off nuclei with a smaller atomic mass (e.g., carbon, hydrogen, lithium). A low atomic mass of the nuclei means that a neutron needs to undergo fewer collisions with the moderator to slow down to a particular energy.

Every time a neutron collides with a nucleus, there is a finite probability that the neutron will be captured by that nucleus. Typically, neutron capture in a non-fuel material like a moderator should be minimized because it cannot result in fission. To reduce neutron capture, a moderator with a higher moderating efficiency should be one that has a low capture cross section and a low atomic mass. A low capture cross section means that, for every collision with the moderator, there is a low probability the neutron will be captured.

The reactor cores of some nuclear reactor systems use graphite as a moderator. In some implementations, the reactor core 106 uses a moderator material that has a higher moderating effectiveness than does graphite alone.

In some implementations, a form of zirconium hydride (e.g., $ZrH_{1.6}$) can be used as a moderator in the reactor core 106 instead of, or in some implementations in addition to, graphite. $ZrH_{1.6}$ is a crystalline form of zirconium hydride, with face-centered cubic symmetry. There are other phases of zirconium hydride ($ZrH_x$, where x can range from 1 to 4) and the physical properties of zirconium hydride vary among the other phases. In some implementations, the zirconium hydride moderator could be in the form of a solid single crystal. In some implementations, a powdered form of zirconium hydride, comprising smaller crystals could be used. In some implementations, smaller crystals could be formed into solid shapes (using, for example, one or any combination of the following processes: sintering the crystals, binding the crystals together using a binder such as coal tar, or any other suitable process).

Zirconium hydride has a greater moderating ability than graphite because it has a high density of hydrogen nuclei. The hydrogen nuclei in zirconium hydride are approximately 12 times lighter than the carbon nuclei in graphite. Following equation 1.1, a neutron typically requires fewer collisions with zirconium hydride to reach thermal energies than it does with graphite. In some implementations, using zirconium hydride rather than graphite alone in the reactor core 106 can increase the number of neutrons in the epithermal and thermal energy ranges.

The use of zirconium hydride as a moderator can also provide the benefit of increasing the rate at which U-238 is transmuted into Pu-239. This increase can allow the nuclear reactor system 101 to operate as a so-called converter reactor by producing fissile Pu-239 at the same or substantially the same rate as fissile and fissionable actinides are consumed. Although minor actinides-e.g., actinide elements other than uranium or plutonium-are more easily fissioned with fast neutrons, they can still be fissioned in such implementations using the neutron spectrum that would be present in reactor core 106.

Other types of moderators individually and in combination can be used as a moderator in the stationary reactor core 106, or in the movable moderating elements, or in both of them. For example, any suitable combinations of any two or more of graphite, zirconium hydride, zirconium deuteride, or other moderator materials can be used.

In some implementations, the moderator material has a high density of light atomic nuclei (e.g., hydrogen, deuterium, lithium, etc., individually or in any combinations of any two or more of them). The concentration of hydrogen in ZrH is 1.6 hydrogen atoms per zirconium atom. Additional or other materials, or combinations of them, with similar or higher densities of hydrogen can be used as a moderator material. Other moderator materials may include any of the following individually or in any combination: other metal hydrides, metal deuterides, and low atomic mass materials in solid form (e.g. solid lithium). In some implementations, zirconium deuteride may be more effective than zirconium hydride because deuterium has a much smaller neutron absorption cross section than hydrogen. Specifically, our computer simulations show the following materials to be effective moderators in our reactor core design: zirconium hydride ($ZrH_{1.6}$ and $ZrH_2$), yttrium(II) hydride ($YH_2$), yttrium(III) hydride ($YH_3$), and lithium hydride (LiH). Those materials could be used individually or in any combination of two or more of them.

In some implementations, the level of reactivity in the reactor core 106 can be controlled using one or more movable moderating elements, for example moderator rods. The moderating elements can alter the thermal and epithermal neutron spectra by being inserted into and removed from the reactor core 106. In some implementations, these moderating materials may be in the form of rods, blocks, plates, or other configurations, used individually or in any combination.

The moderating rods can be made of zirconium hydride, zirconium deuteride, graphite, used individually, or any other suitable material or combination of materials. The rods may be of a wide variety of shapes, sizes, and configurations, and can have a wide variety of approaches for their insertion into and removal from the reactor core.

In the context of reactivity control, in some implementations, a moderating rod can mean an element made of moderating material that can be inserted or withdrawn from the reactor core. In some implementations, the moderator rods can be movable relative to the reactor core vessel 106 so that the moderator rods can be fully or partially withdrawn from the reactor core 106. In some examples, the nuclear reactor system 101 is subcritical when the moderator rods are partially or fully withdrawn from the reactor core 106. Reactivity is increased by partially or fully inserting moderator rods until the reactor becomes critical. The reactor can be shut down by withdrawing the moderator rods.

In some implementations, the use of zirconium hydride (and possibly other hydrides and deuterides) as a moderator material can allow the nuclear reactor system 101 to operate entirely on spent nuclear fuel. In some implementations, the use of such materials can allow the nuclear reactor system 101 to operate partially on spent nuclear fuel. In some implementations, zirconium hydride could be used to make, for example, a more efficient thorium molten salt reactor. In some implementations, the use of zirconium hydride could make a thorium molten salt reactor more neutronically efficient because the moderating effectiveness of zirconium hydride is greater than that of graphite. The use of zirconium hydride in a thorium reactor-a reactor that transmutes thorium into fissile U-233-could reduce the required amount of fuel, could improve fuel utilization, could reduce the required size of the reactor core, or could achieve a combination of them.

In some implementations, it is desirable to surround the moderating material with a material that is more resistant to chemical corrosion than the moderating material is, e.g., using either a graphite or a silicon carbide composite (or a combination of them) cladding on a zirconium hydride moderator rod. Including such a cladding reduces the likelihood of corrosion-induced degradation of the moderating material. In various implementations, the cladding material can have a low neutron absorption cross section, can be a neutron moderator, or can have a combination of these and other properties. In some examples, the cladding can be provided on parts of the reactor core. In some examples, the cladding can be provided on parts of the moderator rods. In some examples, the cladding can be provided on both.

In some implementations, differential swelling or shrinkage of materials comprising the reactor core 106 can occur. For example, zirconium hydride, graphite, or other moderator materials in the reactor core 106 will be subject to large neutron fluxes, which can lead to volumetric swelling or shrinkage. In cases in which both graphite and zirconium hydride are used in the reactor core 106, the graphite and the zirconium hydride could experience significantly different amounts of volumetric swelling or shrinkage. In some implementations, gaps can be provided at the interfaces of the graphite and zirconium hydride to prevent (or reduce the tendency of) such swelling or shrinkage from cracking the graphite cladding and exposing the zirconium hydride directly to the fuel-salt mixture.

In some implementations, the reactor core 106 can be designed with gaps at the interfaces between different types of materials, for example, to protect against damage caused by differential swelling or shrinkage. In some implementations, the gaps could be filled with an inert gas, e.g., helium, to reduce chemical interactions between the materials.

Alternatively or in addition to movable moderating elements, movable control rods can be used in reactor core 106 in some instances. Control rods can remove neutrons from the system by capturing neutrons that are incident upon them. For example, control rods that are used on solid-fuel reactors, or other types of control rods, or combinations of them, can be used. Reactivity can be increased by withdrawing the control rods from the reactor core 106. Reactivity can be decreased by inserting the control rods in the reactor core 106.

In some implementations, the same or a similar effect can be achieved in some cases using a reflector control system. In some examples, both a reflector system and control rods could be used. In some examples of reflector control systems, movable sheets of either absorbing or of a moderating material (or a combination of them) can reside between an interior region of the reactor core 106 and a reflector about the interior region. The sheets can be manipulated (e.g., raised, lowered, rotated, or otherwise manipulated) to increase or decrease the amount of neutrons reflected into the interior region of the reactor core 106. The reflector 205 may be inside the reactor vessel 203, outside the reactor vessel, or both.

In some implementations, in combination with or in replacement of the techniques described above, reactivity can be controlled by adjusting the rate at which additional fuel is added to the fuel-salt mixture in the primary loop 102. In some cases, reactivity can be controlled by adjusting the rate at which waste materials are removed from the fuel-salt mixture in the primary loop 102. In some implementations a combination of the rate of adding fuel and the rate of removing waste can be used. As fuel is consumed in the reactor core, the reactivity of the fuel-salt mixture decreases. Eventually, without adding fuel or removing waste, or both, the fuel-salt mixture would no longer be critical, and the generation of heat would stop. By adding fuel and removing waste at appropriate rates, the reactivity can be maintained at a suitable level.

In some implementations, the fissile-to-fertile ratio may be too low to remain critical over time. In such instances, in addition to or in replacement of the techniques described above, reactivity may be controlled by partially or fully inserting or removing solid fuel elements. Inserting a solid fuel element that has a higher fissile concentration than the fuel-salt mixture may increase reactivity in the reactor. Conversely, removing such an element would reduce the reactivity of the reactor system. Such solid fuel elements may take the form of one of oxide fuel rods such as those used in conventional reactors, or metallic fuel rods, or plates of metallic fuel, or pebbles containing fissionable material, or a combination of any two or more of those. The fissionable fuel may comprise any one or a combination of any two or more of enriched uranium (up to 20% U-235), or depleted uranium, or natural uranium, or actinide material from spent fuel, or weapons material, or thorium and a fissile material, or any combination of these with any other fissionable material.

In some instances, a solid fuel element may comprise pellets of fissionable material surrounded by a cladding material. In various implementations, the cladding material may comprise a metal or metal alloy similar to or the same as those used in conventional reactors, or a metal or metal alloy such as Hastelloy that is resistant to corrosion in molten salts, or any other suitable metal or metal alloy, or a moderating material such as graphite, or zirconium hydride, or yttrium hydride, or any combination of two or more of those.

In some instances, solid fuel elements may be fully inserted at all times during operation and may be replaced, periodically or otherwise, as they are in conventional reactors. In such implementations, the solid fuel elements may provide more reactivity than the fuel-salt mixture alone. This would allow a reactor to operate with a fuel-salt mixture that has a lower concentration of heavy nuclei, allow a reactor to operate with a fuel-salt mixture with a lower fissile-to-fertile ratio, or allow higher burnup-a measure of how much fuel material has undergone fission-of the fuel in the fuel-salt mixture, or any combination of these.

In some instances, solid fuel elements removed from a molten salt reactor may contain large amounts of long-lived heavy nuclei, similar to those found in spent fuel from conventional reactors. In some implementations, these used fuel elements could then be mixed with a molten salt for use as a fuel-salt in a molten salt reactor. In some cases, these used fuel elements could be put in temporary storage or sent to a permanent disposal facility.

If an important objective of operating molten salt reactors is reducing spent fuel inventories, the use of molten salt reactors that include solid fuel elements may still be advantageous if more actinide waste is destroyed than is produced by such reactors. If the primary objective is electricity production, the amount of actinide waste produced may be of lesser concern.

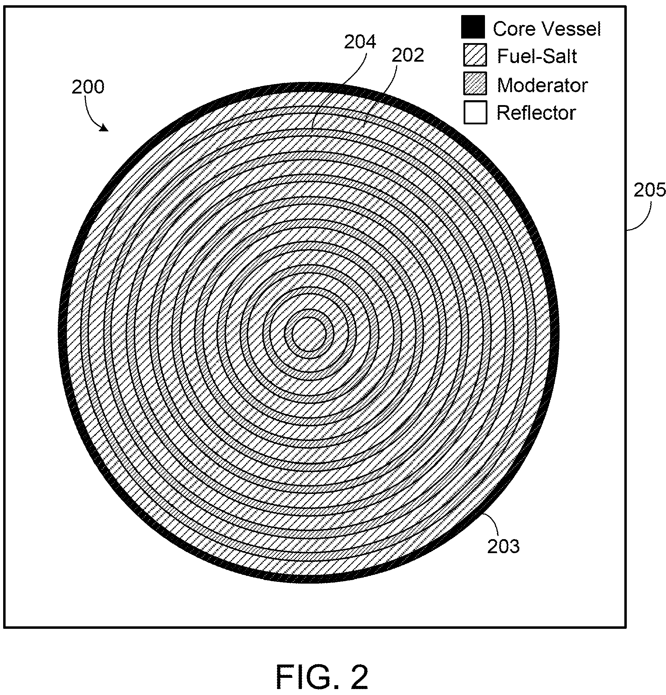

Figure 2 is a schematic cross-sectional diagram of an example reactor core configuration 200 used in numerical simulations. The numerical simulations were used to test the ability to reach criticality in a molten salt reactor using only spent nuclear fuel dissolved in a molten lithium fluoride salt as fuel. The numerical simulations used the SCALE code system developed by Oak Ridge National Laboratory. In the implementation shown in figure 2, the reactor core was modeled as a series of ten concentric moderator cylinders (which we sometimes refer to as rings) 204 at equal radial spacings, a core vessel 203 made of Hastelloy, and a fuel-salt mixture 202 in the gaps between the moderator rings. (Figure 2 also shows a reflector 205.) Concentric rings were used in the numerical simulations for ease of computer modeling. A wide variety of other types of reactor core configurations may be advantageous or optimal in various contexts.

The cylinders in the simulations were 3 meters tall.

In the numerical simulations, the Hastelloy core vessel was 5 cm thick and had an inner radius of 1.5 meters. Each of the ten concentric zirconium hydride rings was 5 cm thick. The LiF-(Heavy Nuclide)$F_x$ fuel-salt mixture was located in the 9 cm gaps between the zirconium hydride rings and between the outermost moderator ring and the vessel wall. The vessel is surrounded by a neutron reflector 205. In this simulation, the reflector was zirconium hydride ($ZrH_{1.6}$). Additional or other reflectors (e.g., graphite or zirconium deuteride), individually or in combinations, can be used.

Table 1 shows the material data used in the numerical simulations.

Table 1

**Fuel-Salt Mixture**

| | |
|---|---|
| LiF (mol%) | 78 |
| (Heavy Nuclide)$F_x$ (mol%) | 22 |
| Density (g/cm$^3$) | 3.89 |
| Li-7 Enrichment | 99.99% |

**Zirconium Hydride**

| | |
|---|---|
| Zr-90 (wt%) | 51.79 |
| Zr-91 (wt%) | 11.29 |
| Zr-92 (wt%) | 17.26 |
| Zr-94 (wt%) | 17.49 |
| H-1 (wt%) | 2.16 |
| Density (g/cm$^3$) | 5.66 |

**Hastelloy**

| | |
|---|---|
| C (wt%) | 0.06 |
| Co (wt%) | 0.25 |
| Cr (wt%) | 7.00 |
| Mo (wt%) | 16.50 |
| W (wt%) | 0.20 |
| Cu (wt%) | 0.10 |
| Fe (wt%) | 3.00 |
| Mn (wt%) | 0.40 |
| Si (wt%) | 0.25 |
| B (wt%) | 0.01 |
| Ni (wt%) | 72.23 |
| Density (g/cm3) | 8.86 |

(In the discussion that follows, the references to simulation tools are to elements of the Oak Ridge National Laboratory, "SCALE: A Modular Code System for Performing Standardized Computer Analyses for Licensing Evaluations," (2009).) The isotopic composition of spent nuclear fuel from an example light water reactor was calculated with the ORIGEN-ARP graphical user interface, which is a SCALE analytical sequence that solves for time-dependent material concentrations using the ORIGEN-S depletion code and pre-computed cross section sets for common reactor designs. In this case, a Westinghouse 17x17 assembly normalized to 1 metric ton of uranium with an initial enrichment of 4.2% was depleted to 50 GWd/MTHM (gigawatt-days per metric ton of heavy metal) and the isotopic concentrations from the ORIGEN output file were used to calculate the weight percent (wt%) for each actinide isotope (fission products were discarded) in the spent fuel. Table 2 shows the isotopic composition of the spent nuclear fuel used for numerical simulations.

Table 2

| Isotope | wt% |
| --- | --- |
| U-234 | 1.84E-02 |
| U-235 | 7.46E-01 |
| U-236 | 6.05E-01 |
| U-238 | 9.73E+01 |
| Np-237 | 7.59E-02 |
| Pu-236 | 1.00E-10 |
| Pu-238 | 3.50E-02 |
| Pu-239 | 6.33E-01 |
| Pu-240 | 3.10E-01 |
| Pu-241 | 1.41E-01 |
| Pu-242 | 9.61E-02 |
| Am-241 | 4.50E-02 |
| Am-242 | 1.38E-04 |
| Am-243 | 2.61E-02 |
| Cm-242 | 1.41E-06 |
| Cm-243 | 7.40E-05 |
| Cm-244 | 8.80E-03 |
| Cm-245 | 5.23E-04 |
| Cm-246 | 6.76E-05 |
| Cm-247 | 1.07E-06 |
| Cm-248 | 7.74E-08 |
| Bk-249 | 1.00E-10 |
| Cf-249 | 1.08E-09 |
| Cf-250 | 3.51E-10 |
| Cf-251 | 1.85E-10 |
| Cf-252 | 3.41E-11 |

The TRITON-NEWT sequence in SCALE was used to analyze the core model shown in figure 2 and described above. Within this sequence, the TRITON control module is used to call, in order, the functional modules BONAMI, WORKER, CENTRM, PMC, and NEWT. BONAMI performs Bondarenko calculations on master library cross sections to account for energy self-shielding effects; WORKER formats and passes data between other modules; CENTRM uses both pointwise and multigroup nuclear data to compute a continuous energy neutron flux by solving the Boltzmann transport equation using discrete ordinates; PMC takes the continuous energy neutron flux from CENTRM and calculates group-averaged cross sections; and NEWT performs a 2D discrete ordinates calculation to determine the multiplication factor for the system. An axial buckling correction is then applied to account for axial neutron leakage.

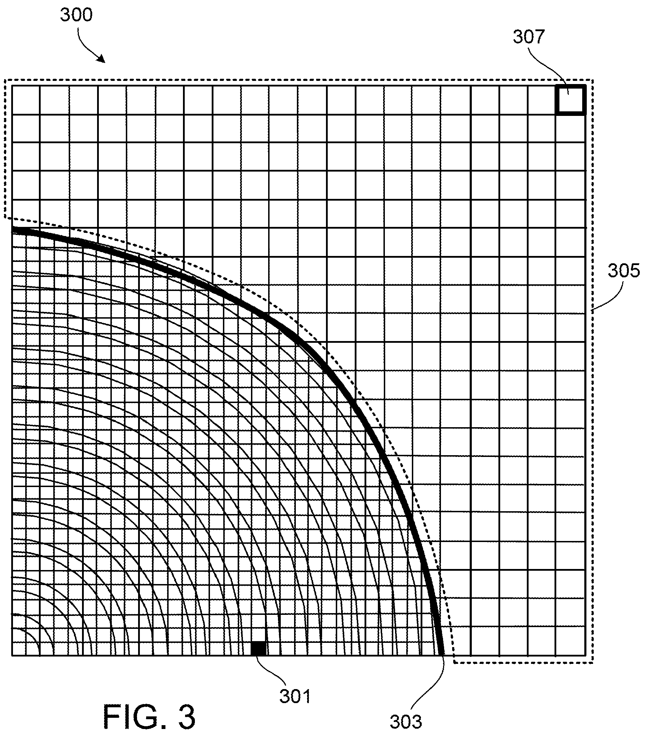

Figure 3 is a diagram of a computational mesh 300 used in the numerical simulations. Only one fourth (a quadrant) of the reactor core was modeled to reduce computational time. The resulting multiplication factor is not affected because of the symmetry of the reactor core. As shown in figure 3, the circular region bounded by the outer edge 303 of the vessel was divided into a thirty-by-thirty mesh 301; the reflector region 305, which fills the remaining area of the 210 cm by 210 cm system, was divided into a twenty-by-twenty mesh 307.

Reflective boundary conditions were used on the bottom and left sides and vacuum boundary conditions were used on the top and right sides. For the axial buckling calculation, the active core height was set to 300 cm with no reflection on either side. The axial buckling correction used here assumes vacuum boundary conditions on the top and bottom of the active core region. An eighth-order quadrature set was used in the NEWT discrete-ordinates transport calculation.

According to the numerical simulations, a multiplication factor (ratio of neutron production to loss) of 1.043 was calculated. This value indicates that there is more than enough reactivity to achieve criticality using the entire spent nuclear fuel actinide vector as fuel, without processing to enhance the actinide vector (e.g., without removing some or all of the uranium).

The numerical simulations used here can be modified to include higher fidelity neutronics calculations, optimized or improved material configurations, a complete three-dimensional model that accounts for reflectivity above and below the reactor core, and other modifications. Such modifications could potentially result in numerical simulations that indicate significantly higher excess reactivity.

As mentioned earlier, in some implementations, a moderator material (e.g., zirconium hydride and others mentioned) may be incompatible with the fuel-salt mixture in the reactor core. In some implementations, a clad material can be used between the moderator material and the fuel-salt mixture. Graphite is compatible with some types of molten salt and is also a neutron moderator. The numerical simulations using zirconium hydride as a moderator material were modified and repeated with the faces on both sides of each zirconium hydride ring replaced with graphite. The numerical simulations used 1 cm graphite cladding on both sides of each zirconium hydride ring. As such, each ring was composed of 1 cm of graphite, 3 cm of zirconium hydride, and another 1 cm of graphite. The numerical simulation showed that this modification does not severely reduce reactivity. The multiplication factor for this modified system was 1.01, which is a reduction of 0.03 due to the addition of the graphite cladding.

In some cases, in which corrosion processes are slow, at least compared with some operational aspects of the nuclear reactor system 101, preventing contact between the fuel-salt mixture and a potentially incompatible moderator material can be accomplished with thin cladding (e.g., a few millimeters thick graphite cladding). In some implementations, materials such as silicon carbide crystals or SiC-SiC composites or combinations of them could be used.

In some implementations, cladding materials could have one or any combination of two or more of the following properties: resistance to corrosion in molten halide salts, low neutron cross sections, and ability to retain their mechanical and material integrity at the reactor's steady-state operating temperatures and pressures. It can be desirable to keep the cladding material as thin as possible, because a thinner layer of cladding material absorbs fewer neutrons. Depending on the material used, the cladding thickness will likely range from approximately one millimeter to one centimeter.

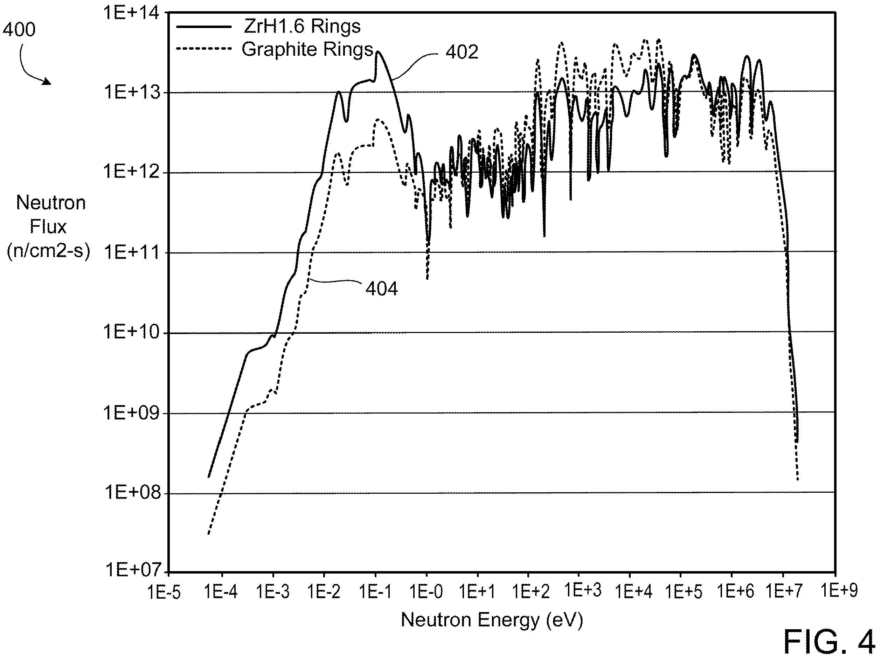

To illustrate the differences in the neutron energy spectrum caused by using zirconium hydride as a moderator instead of graphite, the same numerical simulation was repeated using graphite rings instead of zirconium hydride rings. Figure 4 is a diagram 400 showing plots of the simulated neutron energy spectra in the two different reactor cores. The plot labeled "ZrH1.6 Rings" 402 in the diagram 400 is based on numerical simulations of the reactor core configuration shown in figure 2, which includes zirconium hydride moderator material. The plot labeled "Graphite Rings" 404 in the diagram 400 is based on numerical simulations of the reactor core configuration shown in figure 2, with graphite moderator material substituted for the zirconium hydride moderator material shown in figure 2. The plots shown in the diagram 400 are the full-core neutron energy spectra for both numerical simulations. The total neutron flux was normalized to $1 \times 10^{15}$ n/cm$^2$-s in both numerical simulations.

A comparison of the plots shown in the diagram 400 illustrates, by way of example, some of the advantages of using zirconium hydride as a moderator. As shown in the diagram 400, the numerical simulations indicate that use of zirconium hydride moderator material resulted in approximately ten times more neutrons in the thermal range than in a graphite moderated system. According to the numerical simulations, the multiplication factor for the graphite moderated system was 0.358, which is significantly below criticality, whereas the multiplication factor for the zirconium hydride moderated system was 1.043, which is above criticality.

The reactor core design used in the numerical simulations illustrates, by way of example, some performance aspects of zirconium hydride as a moderator material. These performance aspects, or additional or different operational parameters, can be achieved by using other reactor core designs. In various implementations, there are almost limitless ways to arrange the materials (e.g., the hydride or deuteride moderator, fuel-salt mixture, and Hastelloy vessel).

One design parameter for achieving a critical reactor is the fuel-to-moderator ratio, expressed as a ratio of the volume of the fuel to the volume of the moderator, which is independent of the geometric arrangement of materials. An optimal, improved, or otherwise preferred fuel-to-moderator ratio value could potentially be identified, and such a value may guide the overall core design.

The six-factor formula (equation 1.3) describes the factors used to determine the reactivity (and therefore the criticality) of a nuclear reactor system.

$$k = \eta f p \varepsilon P_{FNL} P_{TNL} \qquad\qquad [1.3]$$

In equation 1.3, k is termed the "neutron multiplication factor" and may also be defined as the number of neutrons in one generation divided by the number of neutrons in the preceding generation. $\eta$ is termed the "reproduction factor" and is defined as the number of neutrons produced by fission per absorption event in the fuel. f is termed the "thermal utilization factor" and is defined as the probability that, for a given neutron absorption event, the neutron absorption occurs in the actinide material. p is termed the "resonance escape probability" and is defined as the fraction of fission neutrons that make the energy transition from fast to thermal without being absorbed. $\varepsilon$ is termed the "fast fission factor" and is defined as the ratio of the total number of fission neutrons divided by the number of fission neutrons produced by thermal fissions. $P_{FNL}$ is termed the "fast non-leakage probability" and is defined as the probability that a fast neutron will not leak out of the system. $P_{TNL}$ is termed the "thermal non-leakage probability" and is defined as the probability that a thermal neutron will not leak out of the system. In general, systems with a high surface area to volume ratio have higher $P_{FNL}$ and $P_{TNL}$.

If k is less than 1, the system is defined as subcritical. A subcritical system cannot sustain a nuclear reaction. If k equals 1, the system is defined as critical. A critical system is in a steady state, and the number of neutrons produced exactly equals the number of neutrons lost. If k is greater than 1, the system is defined as supercritical. In a supercritical system, the number of neutrons produced by fission events increases exponentially.

The reactivity, ρ, of a nuclear reactor is defined as the reactor's divergence from a critical state, and is given by equation 1.4.

$$\rho=(k-1)/k \qquad\qquad [1.4]$$

Figures 1, 2, 5, 6, 7, 8, and 9 show possible reactor core configurations and features for various implementations. A wide variety of these and other reactor core configurations and features, and combinations of them, can be used.

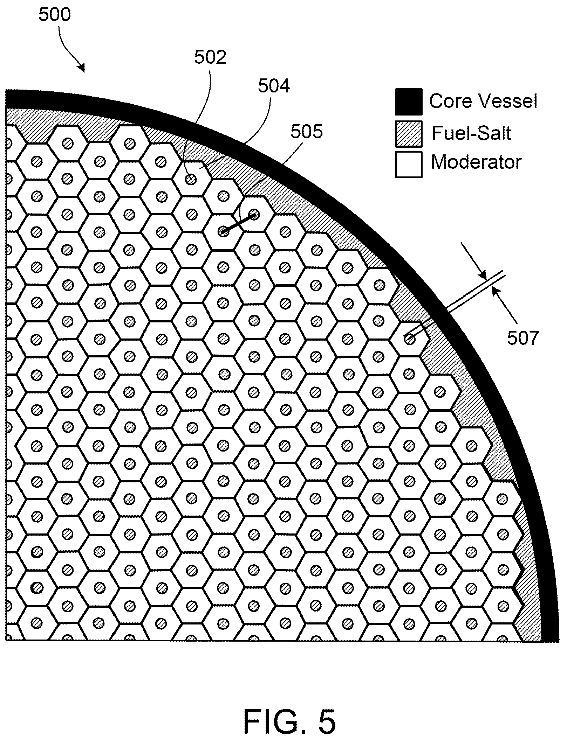

Figure 5 is a cross-sectional view of an example prism configuration 500 for a reactor core. In some implementations of the prism configuration, the fuel-salt mixture flows (perpendicularly to the plane of the paper) through tubular channels 502 in either hexagonal blocks, square blocks, triangular blocks, or other-shaped blocks 504 (or combinations of any two of them) of moderating material.

An example of a prism core configuration 500 with a channel pitch 505-the distance between the center of one channel and the center of an adjacent channel-of 1.26 cm, a channel radius of 0.500 cm 507, and a length of 300 cm was modeled with SCALE. The multiplication factor, k, for this system was 1.0489.

In one instance of the reactor core, in which the diameter is 300 centimeters and the height is 300 centimeters, the volume is approximately 21.2 cubic meters. In this implementation, approximately 30,000 of these hexagonal channels are in the reactor core. In some useful implementations, the open volume of the reactor core (i.e., the volume not occupied by some combination of moderators, cladding, moderator rods, or control rods) is filled entirely with the fuel-salt mixture. The volume and surface area to volume ratio affects the $P_{FNL}$ and $P_{TNL}$ terms of the six-factor formula, as described in a preceding section, and in turn affects the criticality. In general, the varying of the core geometry changes the terms in the six-factor formula.

In the example illustrated in figure 5, each of the hexagonal blocks 504 contains one tubular channel 502. In some implementations, each hexagonal block 504 may contain more than one tubular channel 502. In some implementations, large blocks of moderating material may contain many tubular channels 502. In some implementations, combinations of two or more of such types of hexagonal blocks could be used.

The example reactor core configuration (figure 2) used in the numerical simulations described above uses a manifold configuration. In implementations that include the manifold configuration, the fuel-salt mixture flows through the reactor core from one end 111 (figure 1) to the other end 115 (figure 1) in the regions (gaps) 202 between plates 204 of moderating material. The plates 204 can include sections of moderating material in any suitable shape. A manifold configuration can incorporate curved plates (for example, as shown in figure 2), or flat plates, or a combination of these and any of a wide variety of other types of plate geometries.

In some implementations, the plates can be grouped together in moderator assemblies. In some implementations, multiple assemblies can be aggregated in a single reactor core. In some aspects, such moderator assemblies can be similar to the fuel assemblies used in solid-fueled reactors.

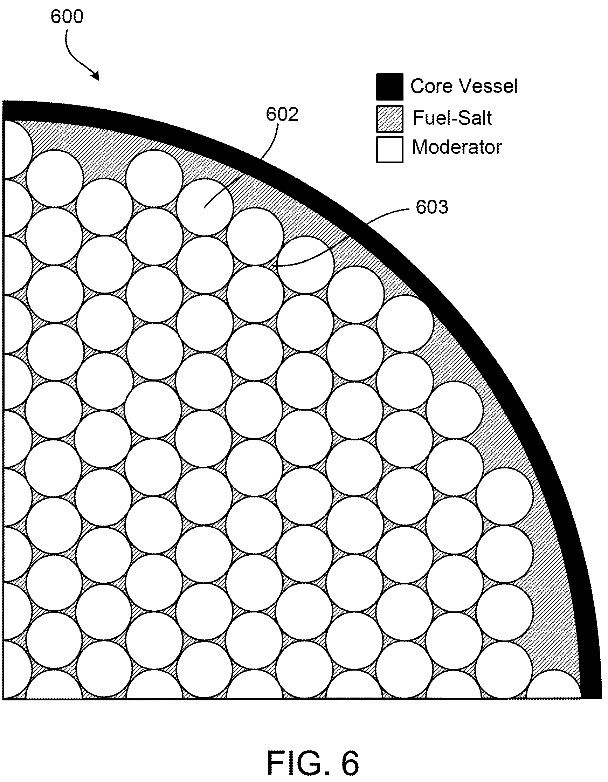

Figure 6 shows a cross-sectional view of an example pebble configuration 600 for stationary (but not permanent) moderator elements of a reactor core. In some implementations of such a pebble configuration, the fuel-salt mixture flows through gaps 603 around pebbles 602 of moderating material as it traverses the reactor core from one end to the other. The pebbles 602 can be spherical (as shown in figure 6) or any other suitable (for example, non-regular) geometry, or a combination of spherical and non-spherical. One example of a pebble core configuration 600 was modeled using SCALE. In this simulation, spherical pebbles (packed such that their centers form a regular rectangular grid with spacing between the center points equal to the diameter of the spheres, unlike figure 6. This is known as a "square pitch.") with radii of 4 cm resulted in a multiplication factor of 1.0327.

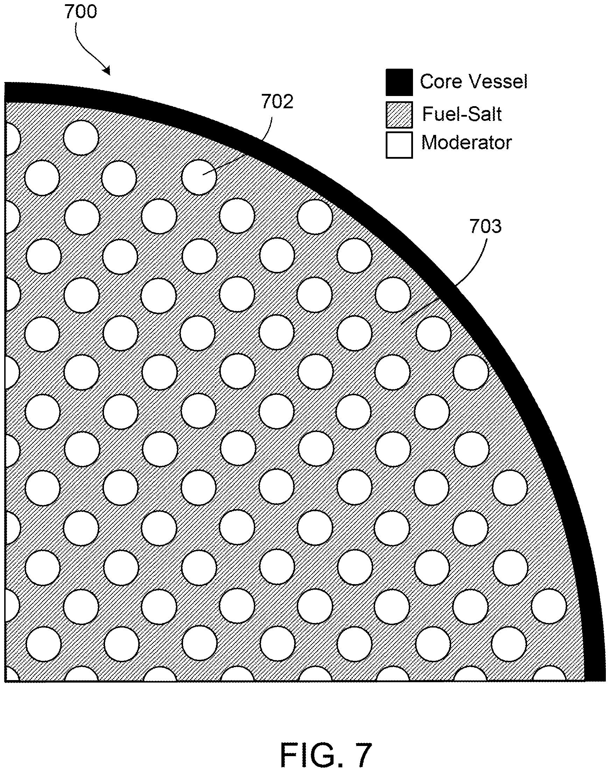

Figure 7 shows a cross-section of an example rod configuration 700 for stationary moderator elements of a reactor core. In implementations of the rod configuration 700, the fuel-salt mixture flows through the gaps 703 around rods 702 of moderating material. The rods 702 can be simple cylinders, or the rods 702 can have another shape. In a single reactor core, sets of rods having different shapes can also be used. For example, the rods 702 can be any one of annular rods; or finned rods; or helical rods; or twisted helical rods; or annular helical rods; or annular twisted helical rods; or closely packed rods with wire-wrap spacers; or closely packed annular rods with wire-wrap spacers, or other types of rods; or can be any combination of two or more of such shapes. One example of a rod core configuration 700, in which the radius of a rod was 0.5075 cm and the rod pitch-the distance between the center of one rod and the center of an adjacent rod-was 1.26 cm, was modeled with SCALE. The multiplication factor for this system was 1.0223.

In some implementations, the rods can each include a hollow inner channel. These rods are called annular rods. The fuel-salt mixture, or possibly a coolant fluid to regulate the temperature of the moderator, can flow through the hollow inner channel of the rods. One instance of an annular rod core configuration, with fuel-salt flowing through a channel within each moderating rod as well as flowing through the spaces outside of the rods, was modeled with SCALE. The inner radius of each rod was 0.05 cm, the outer radius of each rod was 0.53 cm, and the rod pitch was 1.26 cm. The multiplication factor for this system was 1.0235. In the modeled case, the fuel-salt mixture flows both inside and outside the annular rod. In examples in which the fuel salt flows on the outside and a different, non-radioactive coolant on the inside of each rod, the purpose of the non-radioactive coolant would be to keep the annular rod from overheating. Such an approach could be used if the annular rod were made of a material that could not be allowed to get hotter than a certain maximum temperature.

In a given reactor core, it would also be possible to use any combination of two or more of plate elements, pebble elements, and rod elements, and even other kinds of elements and combinations of them. Among the principles that could govern the geometric configuration and selection of the elements would be that the reactor core has a low surface area to volume ratio, to keep the $P_{TNL}$ and $P_{FNL}$ terms of the six-factor formula as high as possible.

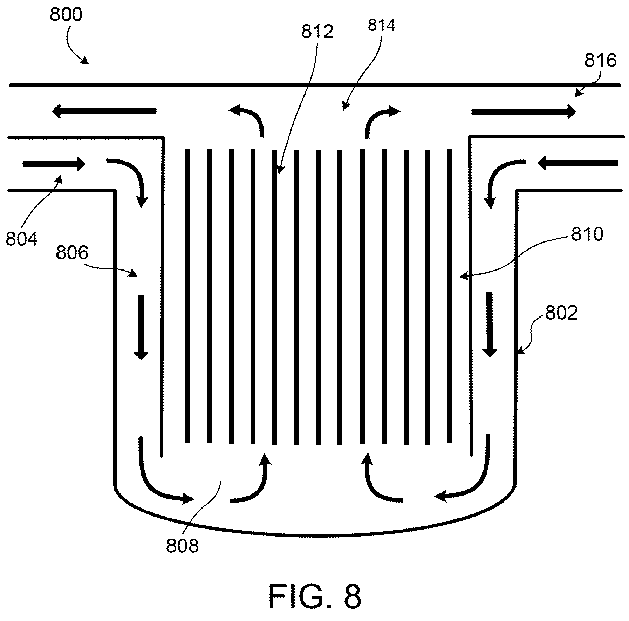

Figure 8 is a side sectional view of an example reactor core 800 that includes an implementation of a downcomer 802. The downcomer 802 in this example forms a cylindrical channel or sleeve around the reactor core and allows the fuel-salt mixture to enter and flow through the reactor core. Figure 8 shows the general direction of flow through the reactor core 800. The fuel-salt mixture enters the reactor core through an inlet region 804 and flows through a cylindrical flow passage 806 of the downcomer 802 into a lower plenum 808. From the lower plenum 808, the fuel-salt mixture flows through the driver region 810 into an upper region 814. From the upper region 814, the fuel-salt mixture flows out of the reactor core through the outlet region 816.

In some implementations, the driver region can be defined as the portion of the reactor core that is not the downcomer. In some configurations, instead of using a downcomer, the fuel-salt mixture directly enters the reactor core at the bottom of the reactor core and flows out of the top of the reactor core. In some configurations, instead of using a downcomer, the fuel-salt mixture directly enters the reactor core at the side of the reactor core and flows out of the other side of the reactor core.

In some implementations, the driver region 810 includes stationary moderator elements 812 comprising moderator material. The downcomer 802 can expose the fuel-salt mixture to neutrons that might otherwise leak out of the core. As such, use of a downcomer 802 can reduce leakage and thereby increase the rate of transmutation of fertile nuclei into fissile nuclei. The downcomer 802 can include moderating material. A downcomer 802 can be used with any of the example core configurations that we have described, and others.

Figure 8 shows the downcomer 802 surrounding the driver region 810. In some implementations, a reactor core can include a downcomer having another configuration. For example, a reactor core can include a downcomer in the center of the reactor core. In such examples, the incoming fuel-salt mixture can flow through the downcomer in the center of the reactor core and then flow through the active region where most of the heat is generated. A wide variety of other configurations would be possible for the downcomer in order to trap neutrons that may leak out of the core (to increase the $P_{TNL}$ and $P_{FNL}$ terms of the six-factor formula). For example, the wider the downcomer is, the fewer neutrons that are lost, but the more salt that must be in the reactor.

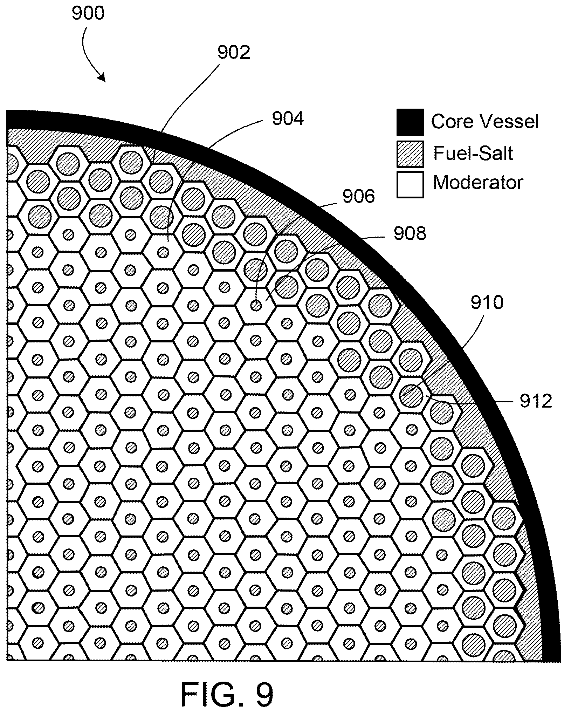

Figure 9 is a diagram of an example reactor core 900 that includes an implementation of a blanket region 902. A blanket region 902 can be used with any of the reactor core configurations that we have described, and others. In some implementations, the blanket region 902 is generally cylindrical and surrounds an interior region 904 of the reactor core. In some implementations, the blanket region 902 and the interior region 904 have different fuel-to-moderator ratios. The fuel-to-moderator ratio in the different regions can be tuned, for example, to increase the fertile-to-fissile transmutation. In some implementations, there may be multiple zones, having different respective fuel-to-moderator ratios. One such example is a core with relatively low moderation in the central zone, an intermediate zone with somewhat higher moderation, and an outer zone with the highest moderation. This would allow the neutron spectrum to remain fast in the central region, and become more thermalized in the radial direction.

In the example shown in figure 9, the fuel-to-moderator ratio is higher in the blanket region 902 than in the interior region 904. In the interior region 904, the fuel-salt mixture flows through channels 906 in blocks 908 of moderator material. In the blanket region 902, the fuel-salt mixture flows through different size (in this case, larger) channels 910 in blocks 912 of moderator material. In some implementations, the interior region can have a higher fuel-to-moderator ratio than the blanket region.

A wide variety of configurations, sizes, and shapes of the plates, the assemblies of plates, and the aggregations of plate assemblies (which we broadly can call the geometry of the moderator plates) would be possible. As one simple example, plates or groups of plates can be twisted, for example, to improve thermal-hydraulic characteristics of the reactor core, or for other purposes. The relationships between criticality (and other figures of merit for the reactor core) and a wide variety of parameters associated with the geometry of the moderator plates (and temperature, etc.) are complex and typically not susceptible to being expressed in explicit formulas. Computer simulations can be used to identify feasible and advantageous geometries of the moderator plates.

Fluoride salts have a high volumetric heat capacity relative to some other reactor coolants, as shown in Table 3 below.

Table 3 - Relative heat-transport capabilities of coolants to transport 1000 MWt with a 100 C rise in coolant temperature

|  | Water | Sodium | Helium | Liquid Salt |
|---|---|---|---|---|
| Pressure, MPa | 15.5 | 0.69 | 7.07 | 0.69 |
| Outlet Temperature, C | 320 | 545 | 1000 | 1000 |
| Velocity, m/s (f/s) | 6 (20) | 6 (20) | 75 (250) | 6 (20) |
| Number of 1-m-diameter pipes required to transport 1000 MWt | 0.6 | 2.0 | 12.3 | 0.5 |

(Source: C. W. Forsberg, "Thermal- and Fast-Spectrum Molten Salt Reactors for Actinide burning and Fuel Production," GenIV Whitepaper, United States Department of Energy, (2007)).

Because of this high heat capacity, the components of the primary loop 102 (e.g., the piping, the valves, and the heat exchanger, putting aside the reactor core) can have smaller internal diameters than those used in a system with other coolants, because the amount of heat that can be carried by the fuel-salt mixture from the reactor core to the heat exchanger is high per unit volume.

The nuclear reactor system 101 can provide safety advantages. The physics of designs such as those described in the previous sections give them many safety features that reduce the likelihood of certain accident scenarios. For example, reactivity in the reactor core 106 could potentially be increased by accidental moderator rod ejection or control rod ejection. If such a reactivity increase (whatever the cause) results in a supercritical system, the temperature in the reactor core and primary loop would rise rapidly. One or more features can be incorporated in the reactor core 106 to compensate for unintended reactivity increases.

For example, the fuel-salt mixture has a positive temperature expansion coefficient. Therefore, when the temperature of the fuel-salt mixture increases, the salt expands and the fuel density decreases, leading automatically to a drop in reactivity. This expansion can also force some of the fuel-salt mixture out of the reactor core 106, and the decreased amount of fuel in the core can lower reactivity.

In cases in which the reactor core 106 operates with a large fraction of U-238 in the fuel, the Doppler broadening effect also can cause a drop in reactivity. This effect can occur when the large thermal resonance of U-238 expands with increasing temperature. Neutron absorption rates increase in the wider U-238 resonance and neutron concentrations below the resonance decline, leading to lower thermal and total fission reaction rates and decreased reactivity. In addition to or in place of these passive safety features, control rods or shutdown rods can be inserted and moderator rod can be removed, or a combination of them can be controlled, to shut down the chain reaction, for example, within a few seconds.

The nuclear reactor system 101 can also provide additional safety advantages. Some nuclear reactors rely on operator action, external electric power, or active safety systems to prevent damage in accident scenarios. For example, some nuclear reactor systems continuously pump coolant over the reactor core to prevent a meltdown. In such conventional nuclear reactor systems, the pumps operate on an external power supply that is separate from the reactor itself. Backup power systems (e.g., large diesel generators and batteries) are used in such nuclear power systems to ensure a constant supply of electricity to the pumps. However, it is possible that all of the backup systems in such conventional nuclear reactors can fail at once (e.g., due to a common cause).

Although, in some implementations, the nuclear reactor system 101 can incorporate one or a combination of two or more of such active safety features, the nuclear reactor system 101 can also or instead provide safety without reliance on such features. For example, the nuclear reactor system 101 can provide passive safety without reliance on active safety measures. Passively safe nuclear reactors do not require operator action or electrical power to shut down safely, for example, in an emergency or under other conditions. The fuel-salt mixture in the nuclear reactor system 101 does not require additional coolant. If the nuclear reactor system 101 loses external power, the fuel-salt mixture flows out of the reactor core through freeze valves 118 into the auxiliary containment subsystem 120.

In some implementations, the nuclear reactor system 101 can provide environmental advantages. Spent nuclear fuel from some reactors includes two broad classes of materials: actinides and fission products. Many of the fission products in the waste produced by some reactors have short radioactive half-lives and have significant radioactivity for only a few hundred years. Many of the actinides in the waste produced by some reactors can be significantly radioactive for upwards of 100,000 years.

The nuclear reactor system 101 can use as fuel the actinides in the spent nuclear fuel from other reactors. By inducing fission in the actinides in the spent nuclear fuel from other reactors, the majority of the waste produced by the nuclear reactor system 101 is composed of fission products. The longer the spent nuclear fuel is held in the nuclear reactor primary loop, the greater the percentage of actinides that can be turned into fission products. As such, the nuclear reactor system 101 can reduce the levels of radioactive materials having longer half-lives that otherwise exist in spent nuclear fuel, and thereby reduce the radioactive lifetime of waste produced by other nuclear reactor systems (e.g., to hundreds of years), thereby decreasing the need for permanent nuclear waste repositories (e.g., Yucca Mountain). The fission products that have shorter half-lives can be safely stored above ground until their radioactivity has decayed to insignificant levels.

In some implementations, the nuclear reactor system 101 can provide advantages in power production. In some implementations, the nuclear reactor power plant system 100 can convert the high-level nuclear waste produced by conventional nuclear reactors into a substantial supply of electrical power. For example, while some nuclear reactor systems utilize only about 3% of the potential fission energy in a given amount of uranium, the nuclear reactor system 101 can utilize more of the remaining energy in some instances. The longer the spent nuclear fuel is held in the nuclear reactor, the greater the percentage of the remaining energy can be utilized. As an illustrative example, substantial deployment of the nuclear reactor system 101 could potentially use existing stockpiles of nuclear waste to satisfy the world's electricity needs for several decades.

As shown in figure 1, a fission product removal 114 component of the primary loop 102 can incorporate a wide variety of systems, components, and techniques. Fission products are produced continuously in the nuclear reactor system 101, as actinides are split. Such fission products can act as neutron poisons in the reactor core 106. Such fission products can be removed from the fuel-salt mixture by a halide slagging process. Halide slagging has been used at an industrial scale for decades as a batch process. The halide slagging process can ensure that the reactor remains critical in some cases.

In some implementations, the fission product removal component 114 comprises a port 123 in the primary loop piping that allows for the removal of a batch 119 of molten fuel-salt mixture. In some implementations, this fuel-salt mixture is then processed using halide slagging 131. In some cases, fresh fuel-salt mixture 121 is then added to the primary loop through, for example, the same port to make up the volume of the removed salt. In some implementations, the halide slagging process can be automated, for example, to make it an in-line unit in the nuclear reactor system 101. In such implementations, the molten fuel-salt mixture, as it flows through the piping of the primary loop, passes through the fission product removal component 114, where the halide slagging process occurs. Other arrangements would also be possible for removing the waste and recharging the primary loop.

In some implementations, one or more freeze valves can control fluid flow between the primary loop 102 and an auxiliary containment subsystem 120. In some examples, these freeze valves are made of a halide salt that is actively and continuously cooled so that the salt is in solid form, allowing them to remain closed during normal operation. In the event of an accident scenario that results in a loss of offsite or backup power supplies, the freeze valves will no longer be actively cooled. When the halide salt comprising the freeze valve is no longer actively cooled, the salt melts and the valve opens, allowing the fuel-salt mixture to flow out of the primary loop 102 into a passively cooled storage tank 117 of the auxiliary containment subsystem 120.

In some implementations, the freeze valves 118 and the passively cooled storage tank 117 can use a wide variety of components, materials, and techniques to provide auxiliary containment of the fuel-salt mixture from the primary loop 102. In some implementations, the auxiliary containment subsystem 120 itself includes a containment vessel 117 that can safely store the fuel-salt mixture from primary loop 120. The geometry of the containment vessel 117 is such that the fuel-salt mixture contained in the containment vessel cannot achieve criticality. For example, the containment vessel 117 could be constructed such that the fuel-salt mixture flowing into it has a large surface area to volume ratio. The fuel-salt mixture in a non-critical configuration can remain cool due to, e.g., natural convection and conduction, without requiring further active cooling.

Any suitable piping can be used for primary loop 102. The piping of primary loop 102 carries the molten fuel-salt mixture. In the primary loop 102, heat is produced in the reactor core 106 when actinides undergo fission following neutron bombardment. The photons, neutrons, and smaller nuclei produced in the nuclear reaction can deposit energy in the fuel-salt mixture 103, heating it. The fuel-salt mixture carries the heat out of the reactor core 106. For example, the pumps 108a move the fuel-salt mixture through the piping of primary loop 102 through the reactor core 106 to the heat exchanger 112.

In some implementations, the piping of the primary loop 102 can be resistant to both corrosion damage from molten halide salts and radiation damage from nuclear reactions. In some cases, corrosion can be reduced or minimized in alloys that have a high nickel content, such as Hastelloy-N or Hastelloy-X. These alloys can operate at temperatures up to 704°C. For systems using higher system temperatures, SiC-SiC composites or carbon-carbon composites or a combination of them can be used for the piping, valves, and heat exchangers of the primary loop. In some implementations, it is possible to hold the fuel-salt mixture contained in the primary loop 102 at approximately atmospheric pressure. Holding the system at approximately atmospheric pressure reduces the mechanical stress to which the system is subjected.

In some implementations, the heat exchanger 112 can include a wide variety of structures, components or subsystems to transfer heat energy between the primary loop 102 and the secondary loop 104. In some implementations, the heat exchanger 112 transfers heat energy from the primary loop 102 to the secondary loop 104, and the secondary loop 104 runs helium gas through a regular gas turbine system in a Brayton cycle. Some types of heat exchangers (e.g., those developed by the aircraft industry) contain buffer gas zones 83 to better separate gases that may diffuse across the heat exchanger. Such a buffer gas zone can be used in the nuclear reactor system 101 to reduce tritium migration from the primary loop 102 to the secondary loop 104.

In some implementations, noble metals can be collected in the primary loop 102 by replaceable high surface area metal sponges 85. The use of such materials can reduce the degree to which noble metals plate on surfaces in contact with the molten fuel-salt mixture. It is desirable to reduce such plating because noble metals' plating onto the heat exchanger 112 can change its heat transfer properties.

In some implementations, the nuclear reactor system 101 can include an intermediate loop that contains a non-radioactive molten salt or any other suitable working fluid. The intermediate loop can be held at a pressure slightly higher than that of primary loop 102. As such, if there were a leak between the intermediate loop and the primary loop, the pressure difference can prevent the radioactive fuel-salt mixture from entering the intermediate loop.

In some implementations, the secondary loop will contain a suitable working fluid, such as helium, carbon dioxide, or steam, or a combination of two or more of them, that will not be corrosive, as a molten halide salt would be, nor contain radioactive materials. Because the secondary loop will not be subjected to significant corrosion or radiation damage, there is more leeway in choosing materials for the secondary loop piping than for the primary loop piping. The secondary loop piping may be constructed of a suitable material such as stainless steel.

The Brayton cycle can use helium, carbon dioxide, or another suitable fluid. In some implementations, the secondary loop 104 can use a steam cycle such as a Rankine cycle, or a combined cycle, which incorporates an assembly of heat engines that use the same source of heat. A Rankine cycle is a method of converting heat into mechanical work that is commonly used in coal, natural gas, oil, and nuclear power plants. A Brayton cycle is an alternative method of a method of converting heat into mechanical work, which also relies on a hot, compressed working fluid such as helium or carbon dioxide. The helium Brayton cycle has the advantage that, in some instances, tritium can be scrubbed (removed) from helium more easily than it can be scrubbed from water. The Brayton cycle may also operate at higher temperatures, which allows for greater thermodynamic efficiency when converting heat to mechanical work. Additional or different factors may be considered in selecting a thermodynamic cycle for the secondary loop 104. Use of open-cycle Brayton turbines is well-established in aircraft and in natural gas power plants. Closed-cycle helium Brayton turbines have been demonstrated at the lab scale.

In some implementations, it would be possible to use the high-temperature process heat produced by the reactor directly. This high-temperature process heat could be used, for example, in hydrogen production, or water desalinization, or district heating, or any combination of two or more of them.

In some implementations, a tritium scrubber component 116 of the secondary loop 104 can incorporate a wide variety of systems, components, and techniques. In a molten salt reactor, tritium can be mobile. For example, the tritium can diffuse readily through the fuel-salt mixture and across the heat exchanger 112 into the secondary loop 104. Such tritium can be scrubbed (e.g., continually, periodically, or otherwise) from the secondary loop 104, for example, to prevent the release of tritium into the environment.

In some implementations, the nuclear reactor system 101 receives spent nuclear fuel 139 from another nuclear reactor system 143. For example, spent nuclear fuel pellets 147 from another nuclear reactor system can be separated from the metal cladding. The pellets can then be dissolved in a molten halide salt 145 for charging the primary loop. In some cases, the spent nuclear fuel can be manipulated in a variety of ways before being combined with the molten fluoride salt. For example, the fuel assembly can be mechanically chopped and shaken to separate the bulk of the spent fuel from the metal cladding. After the bulk of the metal cladding is separated from the spent fuel, some residual metal cladding may remain on the separated fuel. Then, a suitable solvent can be applied to dissolve either the fuel, the cladding, or both. The fuel and cladding materials may be separated more easily when they are in a dissolved state.

In some implementations, the molten fuel-salt mixture is formed using a halide salt 149 (e.g., LiF) that does not yet contain any radioactive material. The halide salt is placed in a mixing vessel and heated until molten in a furnace 151. When the salt is molten, the spent nuclear fuel pellets 147 are added to the molten salt, and the components are mixed until the actinides from the spent fuel pellets are dissolved in the salt to form the fuel-salt mixture. The fuel-salt mixture is then added to the primary loop through the port on the side of the primary loop. In some implementations, computer simulations can determine the actinide and fission product concentrations in the fuel-salt mixture following the fuel-salt mixture's addition to the primary loop. These computer simulations can, in turn, be used to predict the neutron energy spectrum in the reactor core 106. In some cases, following these computer simulations, the loading and unloading cycles of fuel in the reactor can be regulated to ensure an optimal neutron spectrum in the reactor core 106.

In some implementations, the fuel used in the fuel salt mixture can include spent nuclear fuel from other reactors, as we have mentioned. The spent nuclear fuel is typically available in assemblies, which have been removed from an existing reactor 143, and include hollow casings (cladding) of another material that are filled with the spent nuclear fuel in the form of pellets. In some implementations, the assemblies would be altered by removing the cladding to expose the spent fuel pellets. When we speak of unprocessed spent nuclear fuel, however, we do not consider the removal of the cladding to be processing of the spent nuclear fuel. When we say that the spent nuclear fuel is unprocessed we mean that nothing has been done (for example, chemically or reactively, or by way of separation) to change the composition of the spent nuclear fuel that was inside the casing. In some implementations this entire unprocessed spent nuclear fuel vector is used in the reactor. In some implementations, chemical, reactive, or separation processing can be applied to the spent nuclear fuel before it is used in the reactor. For example, we may remove the fission products from the spent nuclear fuel. Removing fission products from the spent nuclear fuel does not change the actinide vector of the spent nuclear fuel. In some cases, either the entire unprocessed spent nuclear fuel vector, or the entire actinide vector, or the actinide vector following additional such processing (such as removal of U-238) can be mixed with other sources of actinides as we discuss elsewhere, in a variety of proportions or mixtures. Thus, the spent nuclear fuel that comes out of the reactor has a small fraction of fission products and a large fraction of actinides. "Unprocessed" spent nuclear fuel has none of these fission products or actinides removed. If the fission products (but not the actinides) are removed, what remains is an "entire spent fuel actinide vector." If some of the actinides (for example, U-238) are removed, what remains can be called processed fuel that contains at least portions of the spent nuclear fuel from a reactor. You can then take any one of these three (unprocessed fuel, the entire spent fuel actinide vector, or processed fuel), or combinations of any two or more them) and also can mix them with other sources of actinides.

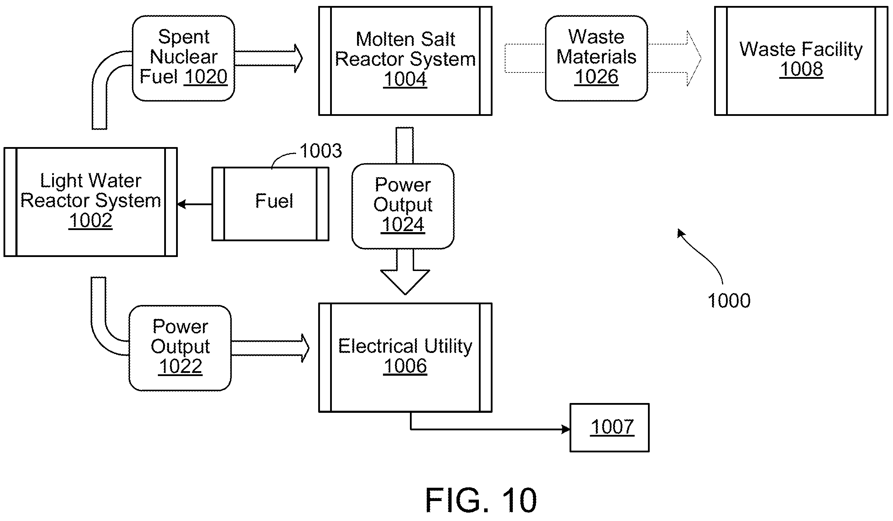

Figure 10 is a flow diagram showing an example process 1000 for processing nuclear materials. The example process 1000 includes operations performed by multiple entities. In particular, as shown in Figure 10, aspects of the example process 1000 can be performed by the operators of a light water reactor system 1002, a molten salt reactor system 1004, an electrical utility 1006, and a waste facility 1008. In some implementations, the process 1000 can include additional or different operations that are performed by the entities shown or by different types of entities.

In some implementations, the light water reactor system 1002 can include a typical light water nuclear reactor or a different type of nuclear reactor system. The light water reactor system 1002 receives nuclear fuel 1003 and generates power by a reaction of the nuclear fuel. The output power 1022 from the reaction of the nuclear fuel can be converted and delivered to the electrical utility 1006. The electrical utility 1006 can distribute the output power 1022 to consumption sites 1007 as electricity. For example, the electrical utility 1006 may use a power grid to distribute electrical power. In some cases, the electrical utility 1006 can convert, condition, or otherwise modify the output power 1022 to an appropriate format for distribution to the grid.

The light water reactor system 1002 produces spent nuclear fuel 1020 as a byproduct of the nuclear reaction that generates the output power 1022. In some implementations, the spent nuclear fuel 1020 from the light water reactor system 1002 can be transferred to the molten salt reactor system 1004. In some implementations, as explained earlier, the molten salt reactor system 1004 operates entirely on the spent nuclear fuel 1020 without further manipulation except removal from any cladding. For example, the molten salt reactor system 1004 can use spent nuclear fuel having substantially the material composition of the waste material produced by the light water nuclear reactor system 1002. In some implementations, the molten salt reactor system 1004 can receive additional or different types of materials, including additional or different types of fuel. For example, the molten salt reactor system 1004 can receive fuel materials from nuclear weapon stockpiles, or nuclear waste storage facilities, or a combination of these and other sources, as mentioned earlier. In some implementations, fresh nuclear fuel can be combined in various proportions with spent nuclear fuel.

In some implementations, the molten salt reactor system 1004 can include the nuclear reactor system 101 of figure 1 or another type of nuclear reactor system configured to burn the spent nuclear fuel 1020. The molten salt reactor system 1004 can be co-located with the light water reactor system 1002, or with the waste facility 1008, or with a combination of any two or more of these and other types of systems and facilities. The molten salt reactor system 1004 generates power by a reaction of the spent nuclear fuel material mixed with a molten salt material. The output power 1024 from the reaction of the fuel-salt mixture can be converted and output to the electrical utility 1006. The electrical utility 1006 can distribute the output power 1024 to consumption sites 1007 in the form of electricity. In some cases, the electrical utility 1006 can convert, condition, or otherwise modify the output power 1024 to an appropriate format for distribution to the grid.

The molten salt reactor system 1004 produces waste material 1026 as a byproduct of the nuclear reaction that generates the output power 1024. In some implementations, the waste material 1026 from the molten salt reactor system 1004 can be transferred to the waste facility 1008. The waste facility 1008 can process, store, or otherwise manage the waste material 1026 produced by the molten salt reactor 1004. In some implementations, the waste material 1026 includes a significantly lower level of long-radioactive-half-life materials than the spent nuclear fuel 1020. For example, the molten salt reactor system 1004 may produce waste materials that primarily include fission products that have short half-lives, as compared to actinides.

Other implementations are within the scope of the following claims.

For example, in some cases, the actions recited in the claims can be performed in a different order and still achieve desirable results. In addition, the processes depicted in the accompanying figures do not necessarily require the particular order shown, or sequential order, to achieve desirable results. In some cases we have described individual or multiple devices for elements for systems for performing various functions. In many cases, references to the singular should be interpreted as references to the plural and conversely.

In some implementations of the system and techniques that we have described here, the operators of the molten salt reactors will be electric utility companies. An electric utility that operates a molten salt reactor may own the molten salt reactor or may lease it from another entity. If a utility owns and operates the molten salt reactor, it will likely finance the construction of the molten salt reactor. If the molten salt reactor is leased to the operator, the manufacturer of the molten salt reactor will likely finance the construction.

In some implementations, an electric utility company may operate light water reactors, which produce spent nuclear fuel that could then be used as fuel for the molten salt reactors, or the utility may be paid to take spent nuclear fuel from another entity and use that spent nuclear fuel as fuel for the molten salt reactors. In some implementations, it is envisioned that spent nuclear fuel will be processed (e.g., removed from its cladding) at the molten salt reactor site and it is likely that the utility that operates the molten salt reactors will also process the spent nuclear fuel. In this case, the utility company would purchase halide salt from a salt producer and then mix the halide salt with processed spent nuclear fuel to create the fuel-salt mixture for use in a molten salt reactor. Alternatively, a separate company may be paid by a utility or government agency to take spent nuclear fuel, mix this spent nuclear fuel with a halide salt purchased from a salt producer, and then sell the fuel-salt mixture to molten salt reactor operators.

In some examples, the waste produced by the molten salt reactors will be taken, for a fee, by a governmental agency that oversees permanent waste disposal. This waste would be processed (e.g. vitrified) into a waste-form suitable for placement in a long-term disposal facility. If immediate disposal is unavailable (as is presently the case in all countries), the waste may be stored on site until long-term storage becomes available, or it may be taken, for a fee, by a government agency or third party for short-term storage until long-term storage becomes available.

The same concepts of using hydrides or deuterides, such as metal hydrides, as moderating material, which we described in the context of a molten salt reactor, may be applied, for example, in molten salt cooled reactors or in accelerator driven systems. Molten salt cooled reactors use distinct fuel and coolants, whereas molten salt reactors use fuel that is mixed with the coolant. Molten salt cooled reactors can have fuel elements that are of essentially any shape; likely shapes are rods or pebbles. The salt coolant, which contains no fuel material, flows around these fuel elements. Previous molten salt cooled reactor designs have proposed using graphite as a moderator. These designs could be altered to use hydride or deuteride moderators, for example, metal hydride moderators, in place of, or in addition to, graphite moderators. Metal hydride moderators for use in molten salt cooled reactors may take any of the forms described above for use in molten salt reactors.

Another potential application of hydride or deuteride moderators is in an accelerator driven systems (ADS). In ADS, neutrons are produced through a process known as spallation when a proton beam from a high energy accelerator is directed at a heavy metal target. When the heavy metal target is surrounded by nuclear fuel, the spallation neutrons can induce fission in the nuclear fuel, which in turn produces even more neutrons. Because the nuclear fuel is in a subcritical configuration, a nuclear chain reaction cannot be sustained without the spallation neutrons produced by the accelerator. This means the reactor may be shut down by simply turning off the accelerator. Such a system is called an accelerator driven system.

ADSs can be used to destroy actinide waste (e.g. spent nuclear fuel from conventional reactors, depleted uranium, excess weapons material). A hydride or deuteride (e.g., metal hydride) moderator may be useful, as it would slow down the high energy spallation neutrons to energies that are more efficient for transmuting or fissioning the surrounding actinide fuel. Thorium fuelled ADSs have also been proposed. Such systems use spallation neutrons and subsequent fission neutrons to convert thorium-232 into protactinium-233, which quickly decays to fissile uranium-233. The transmutation of thorium-232 into uranium-233 is most efficient with thermal neutrons. Hydride or deuteride moderators could be used in such a thorium fuelled ADS to soften the neutron energy spectrum to allow more efficient breeding of U-233 from thorium.

For both types of ADSs, it may be advantageous to place hydride or deuteride moderators around the heavy metal target to reduce the energy of the spallation neutrons. Especially in the thorium fuelled ADS, it may be advantageous to include such moderators not just around the target, but also in the surrounding nuclear fuel zone, as the entire system requires a soft neutron spectrum for optimal U-233 production.

**Claims**

1. A nuclear reactor
comprising: a fissionable
material,

a molten salt, and

a moderator material which comprises a zirconium hydride ($ZrH_x$) in which x is between 1 and 4 **characterized in that**

the nuclear reactor comprises a moderator structure formed of the moderator material and a pathway along which the fissionable material and molten salt can flow from an exit end of the moderator in a loop to an entrance end of the moderator structure.

2. The nuclear reactor of claim 1 in which the moderator material comprises $ZrH_{1.6}$, particularly wherein the zirconium hydride is in a crystalline form.

3. The nuclear reactor of claim 1 in which the moderator material comprises a form of lithium hydride.

4. The nuclear reactor of claim 1 in which the moderator material comprises a form of yttrium hydride, particularly wherein the form of yttrium hydride comprises yttrium(II) hydride (YH2) Yttrium(III) hydride (YH3) or a combination thereof.

5. The nuclear reactor of claim 1 in which the moderator material comprises a form of zirconium deuteride.

6. The nuclear reactor of claim 1 in which the fissionable material comprises natural uranium, enriched uranium, depleted uranium, plutonium or uranium from spent
nuclear fuel, plutonium down-blended from excess nuclear weapons materials, thorium and a fissile material, transuranic material, or a combination of any two or more of them; particularly in which the fissionable material comprises a fissile- to-fertile ratio in the range of 0.01-0.25.

7. The nuclear reactor of claim 1 in which the molten salt comprises lithium fluoride, particularly in which the lithium fluoride is enriched in its concentration of Li-7.

8. The nuclear reactor of claim 1 in which solubility of actinides in the molten salt is sufficient to permit the fissionable material to become critical, particularly in which the solubility of actinides in the molten salt is at least 0.3%, more particularly at least 12%, or more particularly at least 20%.

9. A method comprising:

in a nuclear reactor (100), flowing fissionable material and a molten salt past a moderator material, **characterized in that** the moderator material comprises a zirconium hydride (ZrHx) in which x is between 1 and 4.

10. The method of claim 9 in which flowing the fissionable material and the molten salt past the moderator material comprises flowing a fuel-salt mixture through a reactor core, the fuel-salt mixture comprising the fissionable material and the molten salt.

11. The method of claim 9 in which the fissionable material comprises an entire spent nuclear fuel actinide vector.

12. The method of claim 9 in which the fissionable material comprises portions but not all of the actinides of spent nuclear fuel.

13. The method of claim 9 in which the fissionable material comprises unprocessed spent nuclear fuel.

14. The nuclear reactor (100) of claim 1, further comprising: a primary loop (102) comprising.

a reactor core (106) comprising the moderator structure.

15. The reactor of claim 14 comprising a secondary loop (104) and a heat exchanger (112) to exchange heat between the primary loop and the secondary loop.

16. The reactor of claim 14 comprising an intermediate loop, a secondary loop, a heat exchanger to exchange heat between the primary loop and the intermediate loop, and an additional heat exchanger to exchange heat between the intermediate loop and the secondary loop.

**17.** The reactor of claim 14 also comprising a freeze valve, particularly wherein the freeze valve controls flow between the primary loop and an auxiliary containment subsystem, more particularly between the primary loop and a passively cooled storage tank of the auxiliary containment subsystem.

**Patentansprüche**

**1.** Kernreaktor,
umfassend: ein spaltbares Material,
eine Salzschmelze und
ein Moderatormaterial, das Zirconiumhydrid (ZrHx) umfasst, bei dem x zwischen 1 und 4 liegt,
**dadurch gekennzeichnet, dass**
der Kernreaktor eine Moderatorstruktur, die aus dem Moderatormaterial gebildet ist, und eine Wegstrecke, entlang der das spaltbare Material und die Salzschmelze von einem Austrittsende des Moderators in einem Kreislauf zu einem Eintrittsende der Moderatorstruktur fließen können, umfasst.

**2.** Kernreaktor nach Anspruch 1, bei dem das Moderatormaterial $ZrH_{1,6}$ umfasst, insbesondere wobei das Zirconiumhydrid in kristalliner Form vorliegt.

**3.** Kernreaktor nach Anspruch 1, bei dem das Moderatormaterial eine Form von Lithiumhydrid umfasst.

**4.** Kernreaktor nach Anspruch 1, bei dem das Moderatormaterial eine Form von Yttriumhydrid umfasst, insbesondere wobei die Form von Yttriumhydrid Yttriumdihydrid (YH2), Yttriumtrihydrid (YH3) oder eine Kombination daraus umfasst.

**5.** Kernreaktor nach Anspruch 1, bei dem das Moderatormaterial eine Form von Zirconiumdeuterid umfasst.

**6.** Kernreaktor nach Anspruch 1, bei dem das spaltbare Material natürliches Uran, angereichertes Uran, abgereichertes Uran, Plutonium oder Uran aus abgebranntem Kernbrennstoff, Plutonium herabgemischt aus überschüssigen Kernwaffenmaterialien, Thorium und ein spaltbares Material, transuranisches Material oder eine Kombination aus zwei oder mehr davon umfasst; insbesondere bei dem das spaltbare Material ein spaltbar-zu-brütbar-Verhältnis im Bereich von 0,01-0,25 umfasst.

**7.** Kernreaktor nach Anspruch 1, bei dem die Salzschmelze Lithiumfluorid umfasst, insbesondere bei dem das Lithiumfluorid in seiner Konzentration von Li-7 angereichert ist.

**8.** Kernreaktor nach Anspruch 1, bei dem die Löslichkeit von Aktiniden in der Salzschmelze dazu ausreicht, dass spaltbares Material kritisch werden kann, insbesondere bei dem die Löslichkeit von Aktiniden in der Salzschmelze mindestens 0,3 %, ganz besonders mindestens 12 % oder ganz besonders mindestens 20 % beträgt.

**9.** Verfahren, umfassend:

in einem Kernreaktor (100) das Fließenlassen von spaltbarem Material und einer Salzschmelze an einem Moderatormaterial vorbei,
**dadurch gekennzeichnet, dass** das Moderatormaterial ein Zirconiumhydrid (ZrHx) umfasst, bei dem x zwischen 1 und 4 liegt.

**10.** Verfahren nach Anspruch 9, bei dem das Fließenlassen des spaltbaren Materials und der Salzschmelze am Moderatormaterial vorbei ein Fließenlassen einer Brennstoff-Salz-Mischung durch einen Reaktorkern umfasst, wobei die Brennstoff-Salz-Mischung das spaltbare Material und die Salzschmelze umfasst.

**11.** Verfahren nach Anspruch 9, bei dem das spaltbare Material einen gesamten abgebrannten Kernbrennstoffaktinidvektor umfasst.

**12.** Verfahren nach Anspruch 9, bei dem das spaltbare Material Teile von, aber nicht alle Aktinide von abgebranntem Kernbrennstoff umfasst.

**13.** Verfahren nach Anspruch 9, bei dem das spaltbare Material unverarbeiteten abgebrannten Kernbrennstoff umfasst.

**14.** Kernreaktor (100) nach Anspruch 1, ferner umfassend: einen Primärkreislauf (102), umfassend:

einen Reaktorkern (106), umfassend die Moderatorstruktur.

**15.** Reaktor nach Anspruch 14, umfassend einen Sekundärkreislauf (104) und einen Wärmetauscher (112) zum Austausch von Wärme zwischen dem Primärkreislauf und dem Sekundärkreislauf.

**16.** Reaktor nach Anspruch 14, umfassend einen Zwischenkreislauf, einen Sekundärkreislauf, einen Wärmetauscher zum Austausch von Wärme zwischen dem Primärkreislauf und dem Zwischenkreislauf, und einen zusätzlichen Wärmetauscher zum Austausch von Wärme zwischen dem Zwischenkreislauf und dem Sekundärkreislauf.

**17.** Reaktor nach Anspruch 14, außerdem umfassend ein Frostventil, insbesondere wobei das Frostventil den Fluss zwischen dem Primärkreislauf und einem Zusatzcontainmentsubsystem steuert, ganz besonders zwischen dem Primärkreislauf und einem passiv gekühlten Aufbewahrungstank des Zusatzcontainmentsubsystems.


**Revendications**

**1.** Réacteur nucléaire comprenant :

un matériau fissile,
un sel fondu et
un matériau modérateur contenant de l'hydrure de zirconium (ZrHx) dans lequel x est compris entre 1 et 4,

**caractérisé en ce que**

le réacteur nucléaire comprend une structure de modérateur formée du matériau modérateur et d'un parcours le long duquel le matériau fissile et le sel fondu peuvent s'écouler en boucle depuis une extrémité de sortie du modérateur jusqu'à une extrémité d'entrée de la structure de modérateur.

**2.** Réacteur nucléaire selon la revendication 1, dans lequel le matériau modérateur comprend du $ZrH_{1,6}$ et en particulier dans lequel l'hydrure de zirconium présente une forme cristalline.

**3.** Réacteur nucléaire selon la revendication 1, dans lequel le matériau modérateur comprend une forme d'hydrure de lithium.

**4.** Réacteur nucléaire selon la revendication 1, dans lequel le matériau modérateur comprend une forme d'hydrure d'yttrium, en particulier dans lequel la forme d'hydrure d'yttrium comprend de l'hydrure d'yttrium (II) ($YH_2$), de l'hydrure d'yttrium (III) ($YH_3$) ou une de leurs combinaisons.

**5.** Réacteur nucléaire selon la revendication 1, dans lequel le matériau modérateur comprend une forme de deutériure de zirconium.

**6.** Réacteur nucléaire selon la revendication 1, dans lequel le matériau fissile comprend de l'uranium naturel, de l'uranium enrichi, de l'uranium appauvri, du plutonium ou de l'uranium provenant de combustible nucléaire épuisé, du plutonium récupéré de matériau d'armes nucléaires en excès, du thorium et un matériau fissile, un matériau transuranien ou une combinaison de deux ou plusieurs d'entre eux, et en particulier dans lequel le matériau fissile comprend un rapport fissile-fertile compris dans la plage de 0,01 à 0,25.

**7.** Réacteur nucléaire selon la revendication 1, dans lequel le sel fondu comprend du fluorure de lithium et en particulier dans lequel la teneur en Li-7 du fluorure de lithium est enrichie.

**8.** Réacteur nucléaire selon la revendication 1, dans lequel la solubilité des actinides dans le sel fondu est suffisante pour permettre au matériau fissile de devenir critique, en particulier dans lequel la solubilité des actinides dans le sel fondu est d'au moins 0,3 %, plus particulièrement d'au moins 12 % et plus particulièrement d'au moins 20 %.

**9.** Procédé comprenant les étapes qui consistent à :

dans un réacteur nucléaire (100), faire s'écouler du matériau fissile et un sel fondu devant un matériau modérateur,

**caractérisé en ce que**

le matériau modérateur comprend un hydrure de zirconium (ZrHx) dans lequel x est compris entre 1 et 4.

10. Procédé selon la revendication 9, dans lequel la mise en écoulement du matériau fissile et du sel fondu devant le matériau modérateur comprend la mise en écoulement d'un mélange de combustible et de sel dans le coeur du réacteur, le mélange de combustible et de sel comprenant le matériau fissile et le sel fondu.

11. Procédé selon la revendication 9, dans lequel le matériau fissile comprend un vecteur actinide de combustible nucléaire complètement épuisé.

12. Procédé selon la revendication 9, dans lequel le matériau fissile comprend certains mais non tous les actinides d'un combustible nucléaire épuisé.

13. Procédé selon la revendication 9, dans lequel le matériau fissile comprend du combustible nucléaire épuisé et non traité.

14. Réacteur nucléaire (100) selon la revendication 1, comprenant en outre une boucle primaire (102) qui comprend :

un coeur de réacteur (106) comprenant la structure de modérateur.

15. Réacteur selon la revendication 14, comprenant une boucle secondaire (104) et un échangeur de chaleur (112) qui permet d'échanger de la chaleur entre la boucle primaire et la boucle secondaire.

16. Réacteur selon la revendication 14, comprenant une boucle intermédiaire, une boucle secondaire, un échangeur de chaleur qui échange de la chaleur entre la boucle primaire et la boucle intermédiaire et un échangeur de chaleur supplémentaire qui échange de la chaleur entre la boucle intermédiaire et la boucle secondaire.

17. Réacteur selon la revendication 14, comprenant également une soupape de blocage, en particulier dans lequel la soupape de blocage contrôle l'écoulement entre la boucle primaire et un sous-système de confinement auxiliaire, plus particulièrement entre la boucle primaire et une cuve de stockage refroidie passivement du sous-système de confinement auxiliaire.

FIG. 1

FIG. 2

FIG. 3

FIG. 4

FIG. 5

FIG. 6

FIG. 7

FIG. 8

FIG. 9

FIG. 10

EP 2 766 909 B1

FIG. 11

EP 2 766 909 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 596638

**Non-patent literature cited in the description**

- **C. W. FORSBERG.** Thermal- and Fast-Spectrum Molten Salt Reactors for Actinide burning and Fuel Production. *GenIV Whitepaper, United States Department of Energy,* 2007